(19) Europäisches Patentamt
European Patent Office
Office européen des brevets

(11) EP 1 771 309 B1

(12) **EUROPEAN PATENT SPECIFICATION**

(45) Date of publication and mention of the grant of the patent:
**06.05.2009 Bulletin 2009/19**

(21) Application number: **05758123.3**

(22) Date of filing: **13.07.2005**

(51) Int Cl.:
***B60C 1/00** (2006.01)* ***C08C 19/06** (2006.01)*
***C08L 9/00** (2006.01)*

(86) International application number:
**PCT/EP2005/007607**

(87) International publication number:
**WO 2006/010479 (02.02.2006 Gazette 2006/05)**

(54) **TYRE COMPRISING AN EPOXIDIZED ELASTOMERIC POLYMER AND CROSSLINKABLE ELASTOMERIC COMPOSITION**

REIFEN MIT EINEM EPOXIDIERTEN ELASTOMEREN POLYMER UND VERNETZBARE ELASTOMERE ZUSAMMENSETZUNG

PNEU CONTENANT UN POLYMERE ELASTOMERE EPOXYDE ET COMPOSITION ELASTOMERE DURCISSABLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.07.2004 EP 04008434**

(43) Date of publication of application:
**11.04.2007 Bulletin 2007/15**

(73) Proprietor: **PIRELLI TYRE S.p.A.**
**20126 Milano (IT)**

(72) Inventors:
- **CAPRIO, Michela**
  **I-20126 Milano (IT)**
- **GALIMBERTI, Maurizio**
  **I-20126 Milano (IT)**
- **GRASSI, Lisa**
  **Viale Sarca, 222**
  **I-20126 Milano (IT)**
- **TESTI, Stefano**
  **I-20126 Milano (IT)**
- **TIRELLI, Diego**
  **I-20126 Milano (IT)**

(74) Representative: **Longoni, Alessandra et al**
**AL & Partners Srl**
**Via C. Colombo ang. Via Appiani**
**(Corte del Colone)**
**20038 Seregno (MI) (IT)**

(56) References cited:
**EP-A- 1 195 402**
**EP-A- 1 236 768**
**WO-A-00/37555**
**WO-A-20/04056586**
**US-A1- 2002 095 008**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a tyre and to a crosslinkable elastomeric composition.

More in particular the present invention relates to a tyre including at least one structural element obtained by crosslinking a crosslinkable elastomeric composition comprising at least one epoxidized elastomeric polymer and at least one layered material.

Moreover, the present invention also relates to a crosslinkable elastomeric composition comprising at least one epoxidized elastomeric polymer and at least one layered material, as well as to a crosslinked manufactured article obtained by crosslinking said crosslinkable elastomeric composition.

In the rubber industry, in particular that of tyres for vehicle wheels, it is known practice to add organic fibres such as, for example, polyamide fibres (in particular, aromatic polyamide fibres known as "aramide fibres"), polyester fibres or polyolefin fibres, to elastomeric compositions, in order to improve their mechanical properties (both static and dynamic).

For example, European Patent Application EP 691,218 discloses a tyre component for a pneumatic tyre comprising a reinforced vulcanizable composition, said composition including a vulcanizable elastomeric matrix material, having dispersed therein an effective reinforcing amount of partially oriented fibres having a modulus of less than 10 GPa, preferably less than 6 GPa. As an alternative embodiment, a tyre component may be reinforced with a mixture of a partially oriented fibres and fibrillated pulp fibres (i.e. Kevlar® pulp). The partially oriented fibres may comprise as specific examples, polyamides, polyesters, polyolefins, and a polymer selected from the group consisting of nylon 6, nylon 46, nylon 66, polyethylene, polypropylene, polyethylene-terephthalate (PET). The above mentioned reinforced vulcanizable composition is said to have an improved stiffness without negatively affecting its remaining properties such as, for example, hysteresis and fatigue endurance.

International Patent Application WO 02/24596 in the name of the Applicant discloses a tyre with an elastomeric intermediate layer disposed between the tread band and the belted plies wherein the elastomeric intermediate layer is made of a fibre-reinforced material. Said elastomeric intermediate layer may be reinforced with short reinforcing fibres such as, for example, aramide fibres (i.e. Kevlar® pulp) to improve its modulus of elasticity, among other mechanical properties.

The mechanical properties of the elastomeric compositions may be also improved by increasing crosslinking density of the elastomeric composition by using a large amount of sulphur; or by using a large amount of carbon black, or a very fine and structured carbon black which has a high reinforcing capacity.

However, the above ways of improving mechanical properties may lead to a number of drawbacks.

For example, the addition of organic fibres due to their poor dispersion, may impair the processability of the uncured elastomeric compositions and therefore the quality of the finished product, both in term of mechanical properties and of surface appearance. This may cause a reduction in their tear resistance and detachments from the other elastomeric compositions present in the tyre both during manufacturing process or during use of the tyre. Moreover, the organic fibres have a remarkable anisotropic behaviour, namely they.substantially orient in the direction of the shear forces exerted during extrusion and calendering of the uncured elastomeric composition to form a layer of elastomeric material (usually named "calendering direction"), so as to give to the tyre essentially a longitudinal reinforcement namely a reinforcement essentially in the circumferential direction of the tyre.

On the other hand, the use of a large amount of sulphur may cause remarkable reversion phenomena, which result in modifications of the tyre performances during use. On the other side, it is known that carbon black gives pronounced hysteresis properties to the elastomeric composition, namely an increase in the dissipated heat under dynamic conditions, which results in an increase in the rolling resistance of the tyre. In addition, a large amount of carbon black remarkably increases viscosity of the non-crosslinked elastomeric composition and, consequently, has a negative impact on its processability and extrudability.

Therefore, other ways have been found to improve mechanical properties of the elastomeric compositions.

For example, European Patent Application EP 1,193,085 relates to a tyre with a rubber/cord laminate, sidewall insert and apex including a rubber composition comprising, based upon parts by weight of an ingredient per 100 parts by weight elastomer (phr):

(A) 100 phr of at least one diene-base elastomer;

(B) 30 phr to 100 phr of particulate reinforcement dispersed within said elastomer(s) selected from intercalated smectite, preferably montmorillonite, clay particles, carbon black, synthetic amorphous silica and silica treated carbon black, comprised of:

(1) 1 phr to 10 phr of said intercalated, layered, thin, substantially two dimensional smectite, preferably montmorillonite, clay particles of which at least a portion thereof is in a form of thin, flat, substantially two dimensional exfoliated platelets derived from said intercalated clay; and

(2) 20 phr to 99 phr of at least one additional reinforcing filler comprised of carbon black, synthetic amorphous silica and silica treated carbon black.

The abovementioned rubber composition is said to have improved stiffness and tensile modulus with only a small increase of Tandelta values.

Japanese Patent Application JP 2003/221473 relates to a rubber composition wherein a compound containing maleic anhydride groups and a lamellar clay mineral which has been treated with a primary and/or secondary ammonium ions is mixed with a solid rubber. Compounds containing maleic anhydride groups useful for said purpose are maleic anhydride or maleinized liquid rubbers having a molecular weight ≤ 30,000. Solid rubbers useful for said purpose are naturals rubber, synthetic rubber, thermoplastic elastomers, or mixtures thereof. The abovementioned lamellar clay mineral is said to be uniformly and finely dispersed in said rubber composition.

United States Patent Application US 2003/0191224 relates to an organically modified layered clay ionically bonded with an organic compound having an ammonium group and an amino group and to an organic polymer composition containing the same. Said organic polymer composition comprises (i) an organic polymer, (ii) said organically modified layered clay, and (iii) a low molecular weight organic polymer having a weight average molecular weight of less than 50,000 and/or a high molecular weight organic polymer having a weight average molecular weight of 50,000 or more, each having a functional group capable of reacting with an amino group. Examples of functional groups capable of reacting with an amino group are: acid anhydride group, epoxy group, halogen group, carboxyl group, acyl group, methacryl group, isocyanate group, ester group. The abovementioned organic polymer composition, having good abrasion resistance and air barrier properties, is said to be useful, for example, for making tread, carcass or innerliner, of a pneumatic tyre.

United States Patent Application 2003/0004250 relates to a light weight rubber composition comprising (1) an amino group containing rubbery polymer, wherein said amino group containing rubbery polymer contains from about 0.1 weight percent to about 20 weight percent of a monomer containing an amino group, and (2) from about 0.1 phr to about 25 phr of a 2:1 layered silicate clay. The abovementioned rubber composition, having improved tensile strength and elongation at break, is said to be useful in the manufacturing of rubber articles such as power transmission belts and tyres, in particular tyre tread band and sidewalls.

United States Patent Application US 2003/0144401 relates to nanocomposites comprising a functionalized elastomeric polymer which contains a particulate dispersion therein of an intercalated and at least partially exfoliated, swellable clay such as, for example, montmorillonite clay. Said clay may be pre-intercalated and thereafter blended with, or intercalated and partially exfoliated in situ within, a functionalized elastomer in an aqueous medium, wherein said functionalized elastomer contains at least one functional group selected from acid, acid salts, anhydride, and protonated amine-modified epoxy groups. Said nanocomposite is further blended with at least one additional diene-based elastomer. Articles of manufacture, including industrial belts and tyres, having at least one component including such nanocomposite where such component may be a coating thereon or other integral component, are also disclosed. Such tyre component may be, for example, a tyre tread band, a tyre sidewall and/or a tyre innerliner.

International Patent Application WO 2004/005388 relates to a nanocomposite comprising a clay and an elastomer comprising $C_2$ to $C_{10}$ olefin derived units, wherein said elastomer also comprises functionalized monomer units pendant to the elastomer. Preferably, the elastomer is selected from poly(isobutylene-co-p-alkylstyrene) elastomers and poly(isobutylene-co-isoprene) elastomers, which are functionalized by reacting free radical generating agents and unsaturated carboxylic acids, unsaturated esters, unsaturated imides, and the like, with the elastomer: The abovementioned nanocomposite is said to elastomer is selected from poly (isobutylene-co-p-alkylstyrene) elastomers and poly(isobutylene-co-isoprene) elastomers, which are functionalized by reacting free radical generating agents and unsaturated carboxylic acids, unsaturated esters, unsaturated imides, and the like, with the elastomer. The abovementioned nanocomposite is said to have improved air barrier properties and to be particularly useful for tyre innerliner and innertubes.

EP-A-1 235 768 relates to a process for producing tyres, comprising the following stages:

- manufacturing a green tyre comprising at least one crosslinkable elastomeric material;
- subjecting the green tyre to moulding in a mould cavity defined in a vulcanization mould;
- crosslinking the elastomeric material by heating the tyre to a predetermined temperature and for a predetermined time, characterized in that the crosslinkable elastomeric material comprises: (a) an elastomeric polymer containing carboxylic groups: and (b) an epoxidized elastomeric polymer containing from 0.1 mol% to 20 mol% of epoxide groups relative to the total number of moles of monomers present in the polymer, in which said crosslinking stage is carried out in the substantial absence of additional crosslinking agent. WO 00/37555 A relates to a process for producing tyres for the wheels of vehicles, the said process comprising the following phases:
- making a raw tyre comprising at least one crosslinkable elastomeric material;
- molding the raw tyre in a molding cavity defined in a vulcanization mold;
- crosslinking the elastomeric material by heating the tyre to a predetermined temperature and for a predetermined

time, characterized in that the raw tyre comprises at least one crosslinkable elastomeric material comprising an elastomeric polymer containing epoxide groups and an active filler containing hydroxyl groups which is dispersed in the said polymer, and in that the phase of crosslinking of the said Elastomeric material is carried out essentially without additional crosslinking agents.
WO 2004/056586 A relates to a tyre for two-wheeled vehicles, comprising:

- a carcass structure with at least one carcass ply shaped in a substantially toroidal configuration, the opposite lateral edges of which are associated with respective right-hand and left-hand bead wires, each bead wire being enclosed in a respective bead;
- a belt structure applied in a circumferentially external position relative to said carcass structure, said belt structure comprising at least one layer of a plurality of circumferential coils, axially arranged side by side, of at least one cord wound at substantially-null angle with respect to the equatorial plane of the tyre;
- a tread band superimposed circumferentially on said belt structure;
- a pair of side walls applied laterally on opposite sides relative to said carcass structure; wherein said at least one layer of a plurality of circumferential coils is associated with at least one layer of a crosslinked elastomeric material comprising:

    (a) at least one diene elastomeric polymer;
    (b) at least one layered inorganic material having an individual layer thickness of from 0.01 nm to 30 nm, preferably from 0.05 nm to 15 nm.
    US 2002/0095008 A1 relates to a sulfur-curable rubber compound for a tire tread rubber, comprising at least one diene rubber, at least one filler, and at least one plasticizer, wherein the rubber compound comprises 5 to 90 phr of at least one layered silicate modified with alkylammonium ions and free of guest molecules that have been polymerized or swelled in by a prior treatment.
    EP-A-1 195 402 relates to a rubber composition for an inner liner of pneumatic tire, which is obtained by compounding a rubber component and a layered or platelike mineral having an aspect ratio of 3 or more and less than 30.

The Applicant has noticed that, in particular in the case of elastomeric compositions which usually require a high reinforcement such as those used, for example, for masking bead fillers, sidewall inserts, tread underlayers, tread base, the use of a layered material as reinforcing filler may not be sufficient to achieve the desired properties.
In order to achieve more reinforcement, a large amount of layered material may be used. However, some drawbacks may be encountered such as, for example, a decrease in tearing resistance and, in particular in the case of layered material previously treated with a compatibilizing agent (for example, a quaternary ammonium or phosphonium salt) a premature crosslinking of the elastomeric compositions (scorching phenomena). Moreover, a scarce adhesion to other elastomeric structural elements of the tyre is observed, and consequently detachments in the tyre structure may occur both during manufacturing and during use.
The Applicant has now found that it is possible to obtain crosslinkable elastomeric compositions that may be advantageously used in the production of crosslinked manufactured products, in particular in the manufacturing of tyres, more in particular in the manufacturing of inner structural elements of a tyre, by using at least one epoxidized elastomeric polymer having a low epoxidation degree and at least one layered material.
The crosslinked elastomeric compositions show improved mechanical properties, both static (in particular tensile modulus) and dynamic (in particular, elastic modulus). Moreover, an improved hardness is achieved. Said improvements are obtained without negatively affecting the hysteresis properties of the crosslinked elastomeric compositions. In addition, also the viscosity values of said crosslinkable elastomeric compositions are not negatively affected so allowing a good processability and extrudability of the same.
According to a first aspect, the present invention relates to a tyre comprising at least one structural element obtained by crosslinking a crosslinkable elastomeric compositon comprising:

(a) a crosslinkable elastomeric base comprising at least 10 phr, preferably from 30 phr to 100 phr, of ($a_1$) at least one epoxidized elastomeric polymer including less than 10 mol%, preferably from 0.1 mol% to 5 mol%, of epoxy groups relative to the total number of moles of monomers present in the elastomeric polymer;
(b) from 2 phr to 50 phr, preferably from 5 phr to 30 phr, of at least one layered material, wherein said layered material has an individual layer thickness of from 0.01 nm to 30 nm, preferably from 0.05 nm to 15 nm.

Said epoxy groups may be in the main chain and/or in the side chain of the elastomeric polymer.
The amount of the epoxy groups present on the epoxidized elastomeric polymer may be determined according to known techniques such as, for example, by means of $^1$H-NMR analysis, or by hydrolysis of the epoxy groups and

subsequent functionalization of the obtained hydroxyl groups by agents which are active to UV fluorescence analysis: further details about said techniques will be reported in the examples which follow.

For the purpose of the present description and of the claims which follow, the term "Crosslinkable elastomeric base" means any polymer or polymers mixture, either natural or synthetic, capable of assuming all the chemical-physical and mechanical properties typical of elastomeric polymers as a result of crosslinking with system known in the art such as, for example, a sulphur-based system or a peroxide-based system.

For the purposes of the present description and of the claims which follow, the term "phr" means the parts by weight of a given component of the elastomeric composition per 100 parts by weight of the elastomeric base.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, the tyre comprises:

- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one structural element selected from bead filler, sidewall insert, tread underlayer, tread base, obtained by crosslinking a crosslinkable elastomeric composition above disclosed.

According to a further preferred embodiment, said sidewall insert extends radially from a position corresponding to the bead structure to a position corresponding to a tread lateral edge. Said sidewall insert is usually used in the case of extended mobility tyres such as, for example, run flat tyres.

According to a further preferred embodiment, said tread underlayer is a layer of crosslinked elastomeric composition applied in a radially internal position with respect to said tread band.

According to a further preferred embodiment, said tread band is of cap and base construction and comprises a radially inner layer or tread base and a radially outer layer or tread cap. Preferably, said radially inner layer or tread base has a thickness of at least 10%, preferably of from 20% to 70%, with respect to the total thickness of the tread band.

Preferably, said structural element has a tensile modulus at 100% elongation (100% Modulus) not lower than 3 MPa, preferably of from 4.5 MPa to 16 MPa.

Preferably, said structural element has a. dynamic elastic modulus (E'), measured at 23°C, not lower than 12 MPa, more preferably of from 13 MPa to 50 MPa.

Preferably, said structural element has a dynamic elastic modulus (E'), measured at 70°C, not lower than 8 MPa, more preferably from 9 MPa to 40 MPa.

Preferably, said structural element has a IRHD hardness, measured at 23°C not lower than 70, more preferably from 75 to 95.

The tensile modulus may be measured according to Standard ISO 37:1994. The dynamic elastic modulus (E') may be measured using an Instron dynamic device in the traction-compression mode. The IRHD hardness may be measured according to Standard ISO 48:1994. Further details regarding the above measurement methods will be given in the examples which follow.

According to a further aspect, the present invention relates to a crosslinkable elastomeric composition comprising:

(a) a crosslinkable elastomeric base comprising ($a_1$) at least 10 phr, preferably from 30 phr to 100 phr, of at least one epoxidized elastomeric polymer including less than 10 mol%, preferably from 0.1 mol% to 5 mol%, of epoxy groups relative to the total number of moles of monomers present in the elastomeric polymer;

(b) from 2 phr to 50 phr, preferably from 5 phr to 30 phr, of at least one layered material.

According to one preferred embodiment, said crosslinkable elastomeric base (a), further comprises ($a_2$) at least one second elastomeric polymer in an amount not higher than 90 phr, preferably of from 0 phr to 70 phr.

According to one preferred embodiment, said elastomeric composition may further comprise (c) at least one carbon black reinforcing filler.

According to a further preferred embodiment, said elastomeric composition may further comprise (d) at least one silane coupling agent.

According to a further aspect, the present invention relates to a crosslinked manufactured article obtained by crosslinking a crosslinkable elastomeric composition above reported.

With regard to the epoxidized elastomeric polymer ($a_1$), the epoxy groups may be introduced into the elastomeric polymer according to known techniques.

For example, the epoxy groups may be introduced during the production of the elastomeric polymer, by co-polymerization with at least one epoxy compound containing at least one ethylenic unsaturation. Examples of epoxy compounds containing at least one ethylenic unsaturation are: glycidyl acrylate, glycidyl methacrylate, itaconic acid monoglyciyl ester, maleic acid glycidyl ester, vinylglycidyl ether, allylglycidyl ether, or mixtures thereof.

Alternatively, it is possible to introduce the epoxy groups by reacting the elastomeric polymer, in solution, with at least one epoxidizing agent. This epoxidizing agent is, generally, a peroxide, a peracid or a derivative thereof, in particular a salt thereof (for example, performic acid, perpropionic acid, peracetic acid, m-chloroperbenzoic acid, metal salts of peroxybenzoic acid such as, for example, magnesium bis(2-carboxylate-monoperoxybenzoic acid)hexahydrate) or, alternatively, hydrogen peroxide in the presence of a carboxylic acid or a derivative thereof, in particular anhydrides for example, ascetic acid, formic acid, propionic acid, acetic anhydride), optionally mixed with an acid catalyst (for example, sulphuric acid).

Further details regarding processes for epoxidizing elastomeric polymers are disclosed, for example, in patent US 4,341,672 or by Schulz et al. in "Rubber Chemistry and Technology", Vol. 55, pages 809 et seq.

Preferably, the epoxy groups may be introduced into the elastomeric polymer by means of a process comprising the following steps:

- feeding at least one elastomeric polymer and at least one epoxidizing agent to a mixing device;
- mixing and softening said mixture obtaining an epoxidized elastomeric polymer;
- discharching the obtained epoxidized elastomeric polymer from said mixing device.

Alternatively, the epoxy groups may be introduced into the elastomeric polymer by means of a process comprising:

- feeding at least one elastomeric polymer to a mixing device;
- feeding at least one hydrogen peroxide precursor to said mixing device;
- feeding at least one carboxylic acid or a derivative thereof to said mixing device;
- mixing and reacting, in the presence of water, said at least one elastomeric polymer with said at least one hydrogen peroxide precursor and said at least one carboxylic acid or a derivative thereof, to obtain an epoxidized elastomeric polymer;
- discharging the resulting epoxidized elastomeric polymer from said mixing device.

Preferably, the mixing device may be selected from: open internal mixers such as, for example, open-mills; internal mixers such as, for example, Haake Rheocord internal mixer, or internal mixers of the type with tangential rotors (Banbury) or with interlocking rotors (Intermix); continuous mixers of Ko-Kneader type (Buss); co-rotating or counter-rotating twin-screw extruders. More preferably, the mixing device is a co-rotating twin-screw extruder. '

Preferably, said process may be carried out at a temperature of from 15°C to 200°C, preferably of from 50°C to 180°C.

Preferably, said process may be carried out for a time of from 10 seconds to 30 minutes, preferably of from 30 seconds to 20 minutes.

Preferably, the epoxidizing agent may be selected from those above reported.

Preferably, the hydrogen peroxide precursor may be selected, for example, from inorganic persalts (for example, sodium perborate mono- and tetra-hydrate, sodium percarbonate, potassium peroxymonosulfate), metal peroxides (for example, magnesium peroxide, calcium peroxide, zinc peroxide), hydrogen peroxide adducts (for example, urea/hydrogen peroxide adduct), or mixtures thereof.

Preferably the carboxylic acid or a derivative thereof may be selected, for example, from acetic acid, acetic anhydride, maleic acid, maleic anhydride, succinic acid, succinic anhydride, phthalic acid, phthalic anhydride, or mixtures thereof.

Said epoxidized elastomeric polymer may be obtained in the form of a continuous ribbon or, alternatively, in the form of a subdivided product.

According to one preferred embodiment, the elastomeric polymer which may be utilized in the production of the epoxidized elastomeric polymer ($a_1$), may be selected from those commonly used in sulphur-crosslinkable elastomeric compositions, that are particularly suitable for producing tyres, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be selected, .for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Preferably, the elastomeric polymer may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, elastomeric polymer of one or more monoolefins with an olefinic comonomer and at least one diene, or derivatives thereof, may be used. The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene/diene copolymers (EPDM); polyisobutene; butyl rubbers; halobutyl rubbers, in particular chlorobutyl or bromobutyl rubbers; or mixtures thereof.

Elastomeric polymers functionalized by reaction with suitable terminating agents or coupling agents may also be used. In particular, the elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451,604, or patents US 4,742,124 and US 4,550,142).

The average molecular weight of the elastomeric polymer which may be utilized in the production of the epoxidized elastomeric polymer ($a_1$) is, preferably, of from 2000 to 1,000,000, more preferably of from 50,000 to 500,000.

According to one preferred embodiment, said epoxidized elastomeric polymer ($a_1$) is pre-mixed with the layered material in order to obtain a masterbatch.

Preferably, said masterbatch may be obtained by means of a process comprising the following steps:

- feeding at least one epoxidized elastomeric polymer ($a_1$) and at least one layered material to a mixing device;
- mixing and softening said mixture obtaining a masterbatch;
- discharching the obtained masterbatch from said mixing device.

Alternatively, said masterbatch may be obtained by means of a process comprising the following steps:

- feeding at least one elastomeric polymer, at least one epoxidizing agent, and at least one layered material, to a mixing device;
- mixing and softening said mixture obtaining a masterbatch;
- discharching the obtained masterbatch from said mixing device.

Alternatively, said masterbatch may be obtained by means of a process comprising the following steps:

- feeding at least one elastomeric polymer to a mixing device;
- feeding at least one hydrogen peroxide precursor to said mixing device;
- feeding at least one carboxylic acid or a derivative thereof to said mixing device;
- mixing and reacting, in the presence of water, said at least one elastomeric polymer with said at least one hydrogen peroxide precursor and said at least one carboxylic acid or a derivative thereof;
- feeding at least one layered inorganic material to said mixing device;
- mixing and softening said mixture obtaining a masterbatch;
- discharching the obtained masterbatch from said mixing device.

Preferably, the mixing device may be selected from: open internal mixers such as, for example, open-mills;

internal mixers such as, for example, Haake Rheocord internal mixer, or internal mixers of the type with tangential rotors (Banbury) or with interlocking rotors (Intermix); continuous mixers of Ko-Kneader type (Buss); co-rotating or counter-rotating twin-screw extruders. More preferably, the mixing device is a co-rotating twin-screw extruder.

Said elastomeric polymer may be selected from the elastomeric polymers or copolymers above reported.

Said epoxidixing agent, hydrogen peroxide precursor, carboxylic acid or a derivative thereof, may be selected from those above reported.

Said masterbatch may be obtained in the form of a continuous ribbon or, alternatively, in the form of a subdivided product.

Preferably, said process may be carried out at a temperature of from 20°C to 220°C, preferably of from 40°C to 200°C.

Preferably, said process may be carried out for a time of from 10 seconds to 5 minutes, preferably of from 20 seconds to 3 minutes.

According to one preferred embodiment, the layered material (b) which may be used in the present invention may be selected, for example, from phyllosilicates such as: smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite is particularly preferred. These layered material generally contains exchangeable cations such as sodium ($Na^+$) , calcium ($Ca^{2+}$) potassium ($K^+$) , or magnesium ($Mg^{2+}$) present at the interlayer surfaces.

In order to render the layered material more compatible with the elastomeric polymer said layered material (b) may be treated with at least one compatibilizing agent. Said compatibilizing agent is capable of undergoing ion exchange reactions with the cations present at the interlayers surfaces of the layerd inorganic material.

According to one preferred embodiment, said compatibilizing agent may be selected, for example, from the quaternary ammonium or phosphonium salts having general formula (I):

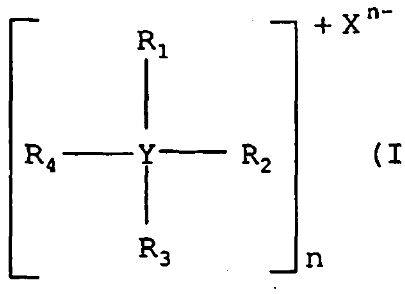

(I)

wherein:

- Y represents N or P;
- $R_1$, $R_2$, $R_3$ and $R_4$, which may be identical or different, represent a linear or branched $C_1$-$C_{20}$ alkyl or hydroxyalkyl group; a linear or branched $C_1$-$C_{20}$ alkenyl or hydroxyalkenyl group; a group -$R_5$-SH or -$R_5$-NH

wherein $R_5$ represents a linear or branched $C_1$-$C_{20}$ alkylene group; a $C_6$-$C_{18}$ aryl group; a $C_7$-$C_{20}$ arylalkyl or alkylaryl group; a $C_5$-$C_{18}$ cycloalkyl group, said cycloalkyl group possibly containing hetero atom such as oxygen, nitrogen or sulphur;

- $X^{n-}$ represents an anion such as the chlorine ion, the sulphate ion or the phosphate ion;
- n represents 1, 2 or 3.

The layered material (b) may be treated with the compatibilizing agent before adding it to the elastomeric base (a). Alternatively, the layered material (b) and the compatibilizing agent may be separately added to the elastomeric base (a).

The treatment of the layered material (b) with the compatibilizing agent may be carried out according to known methods such as, for example, by an ion exchange reaction between the layered material and the compatibilizer: further details are described, for example, in patents US 4,136,103, US 5,747,560, or US 5,952,093.

Example of layered material (b) which may be used according to the present invention and is available commercially is the product known by the name of Dellite® 67G from Laviosa Chimica Mineraria S.p.A.

As reported above, the polymeric base (a), may further comprises at least one second elastomeric polymer ($a_2$). Said elastomeric polymer ($a_2$) may be selected from the elastomeric polymers or copolymers above reported. Among those, the preferred elastomeric polymers ($a_2$) are:

- cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof;
- ethylene/propylene/diene copolymers (EPDM); polyisobutene; butyl rubbers; halobutyl rubbers, in particular chlorobutyl or bromobutyl rubbers; or mixtures thereof.

Elastomeric polymers of one or more monoolefins with an olefinic comonomer such as, for example, ethylene/propylene copolymers (EPR), or mixtures thereof, may also be used as elastomeric polymers ($a_2$).

As disclosed above, said elastomeric composition may further comprise (c) at least one carbon black reinforcing filler.

According to one preferred embodiment, the carbon black reinforcing filler which may be used in the present invention may be selected from those having a surface area of not less than 20 $m^2/g$ (determined by CTAB absorption as described in Standard ISO 6810:1995).

According to one preferred embodiment, said carbon black reinforcing filler is present in the elastomeric composition in an amount of from 0 phr to 120 phr, preferably of from 20 phr to 90 phr.

As disclosed above, said elastomeric composition may further comprise (d) at least one silane coupling agent.

According to one preferred embodiment, the silane coupling agent which may be used in the present invention may be selected from those having at least one hydrolizable silane group which may be identified, for example, by the following general formula (II):

$$(R)_3Si\text{-}CnH_{2n}\text{-}X \qquad (II)$$

wherein the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, - $(S)_mC_nH_{2n}$-Si- $(R)_3$, or -S-COR, in which m and n are integers between 1 and 6 inclusive and the groups R are defined as above.

Among the silane coupling agents that are particularly preferred are bis(3-triethoxysilyl-propyl)tetrasulphide and bis(3-triethoxysilylpropyl)-disulphide. Said coupling agents may be used as such or as a suitable mixture with an inert filler (for example carbon black) so as to facilitate their incorporation into the elastomeric base (a).

According to one preferred embodiment, said silane coupling agent is present in the elastomeric composition in an amount of from 0 phr to 10 phr, preferably of from 0.5 phr to 5 phr.

At least one additional reinforcing filler may advantageously be added to the above reported elastomeric composition, in an amount generally of from 0.1 phr to 120 phr, preferably of from 20 phr to 90 phr. The reinforcing filler may be selected from those commonly used for crosslinked manufactured products, in particular for tyres, such as, for example, silica, alumina, aluminosilicates, calcium carbonate, kaolin, or mixtures thereof.

The silica which may be used in the present invention may generally be a pyrogenic silica or, preferably, a precipitated silica, with a BET surface area (measured according to ISO standard 5794/1) of from 50 $m^2/g$ to 500 $m^2/g$, preferably of from 70 $m^2/g$ to 200 $m^2/g$.

When a reinforcing filler comprising silica is present, the elastomeric composition may advantageously incorporate a further silane coupling agent capable of interacting with silica and of linking it to the elastomeric polymer during the vulcanization. Examples of silane coupling agents which may be used have been already disclosed above.

The elastomeric composition above reported may be vulcanized according to known techniques, in particular with sulphur-based vulcanizing systems commonly used for elastomeric polymers. To this end, in the composition, after one or more steps of thermomechanical processing, a sulphur-based vulcanizing agent is incorporated together with vulcanization accelerators. In the final processing step, the temperature is generally kept below 120°C and preferably below 100°C, so as to avoid any unwanted pre-crosslinking phenomena.

The vulcanizing agent most advantageously used is sulphur, or molecules containing sulphur (sulphur donors), with accelerators and activators known to those skilled in the art.

Activators that are particularly effective are zinc compounds, and in particular ZnO, $ZnCO_3$ zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, $Pb_3O_4$, $PbO_2$ or mixtures thereof.

Accelerators that are commonly used' may be selected from: dithiocarbamates, guanidine, thiourea, thiazoles, sulphenamides, thiurams, amines, xanthates, or mixtures thereof.

Said elastomeric composition may comprise other commonly used additives selected on the basis of the specific application for which the composition is intended. For example, the following may be added to said elastomeric composition: antioxidants, anti-ageing agents, plasticizers, adhesives, anti-ozone agents, modifying resins, fibres (for example Kevlar® pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said elastomeric composition. The amount of plasticizer generally ranges from 0 phr to 70 phr, preferably from 5 phr to 30 phr.

The above reported elastomeric composition may be prepared by mixing together the elastomeric base components and the layered material or a masterbatch thereof, with the reinforcing filler and the other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

The present invention will now be illustrated in further detail by means of a number of illustrative embodiments, with reference to the attached Fig. 1-4:

- Fig. 1-4 are a view in cross section of a portion of a tyre made according to the invention;
- Fig. 5 is a schematic diagram of a production plant for making a masterbatch according to the process of the present invention.

"a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tyre (100), with which the tyre engages on a rim (not represented in Fig. 1) forming part of a vehicle wheel. The space defined by each carcass back-fold (101a) contains a bead filler (104) which may be made according to the present invention, wherein the bead core (102) is embedded. An antiabrasive strip (105) is usually placed in an axially external position relative to the carcass back-fold (101a) .

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of an elastomeric material.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) which may be made according to the present invention, is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion

of the development of said belt structure (106), for instance at opposite side portions of said belt structure (106) (not represented in Fig. 1).

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tyres, a rubber layer (112) generally known as a liner, which provides the necessary impermeability to the inflation air of the tyre, may also be provided in an inner position relative to the carcass ply (101).

Fig. 2, shows a tyre (100) having a structure as described in Fig. 1 where the tread underlayer (111) which may be made according to the present invention, is placed between the belt structure (106) and the carcass ply (101).

Fig.3, shows a tyre (100) having a structure as described in Fig. 1 where a sidewall insert (113) which may be made according to the present invention, which extends radially from a position corresponding to the bead structure to a position corresponding to a tread lateral edge, is placed in an axially internal position with respect to the carcass ply: for example, as represented in Fig. 3, said sidewall insert is placed between the carcass ply (101) and the liner (112). Alternatively, in the case in which more carcass plies are present, a sidewall insert (113) is placed between two of said carcass plies (not represented in Fig. 3.) Alternatively, a sidewall insert is placed beetween the carcass ply and the side wall (not represent in Fig. 3). More than one sidewall insert may be present as disclosed, for example, in patent US 5,238,040 or in European Patent EP 943,466.

Fig.4, shows a tyre (100) having a structure as described in Fig. 1 where a tread band (109) is of cap and base construction. More in particular, said tread band (109) comprises a radially inner layer or tread base (109c) and a radially outer layer or tread cap (109b): the tread base (109c) may be made according to the present invention.

As represented in Fig. 5, the tread base (109c) has a uniform thickness. In any case, the thickness of the tread base (109c) may also be not uniform but, for example, greater near its outer edges and/or at the central zone thereof.

With reference to Fig. 5, the production plant (200) includes an extruder (201) suitable for carrying out the masterbatch preparation according to the present invention. As schematically shown in Fig. 5, by means of feed hoppers (206) the extruder (201) is fed with the compounds necessary for producing the masterbatch. Preferably, the extruder is a co-rotating twin screw extruder.

Generally, the compounds are fed simultaneously to the extruder. For example, the elastomeric polymer (202) and the epoxidizing agent which may be selected from those above reported (203) are fed to the extruder through a feed hopper (206). Alternatively, the compounds may be fed to the extruder (201) through different feed hoppers (not represented in Fig. 5).

Each flow (202) and (203) is fed to the feed hopper (206) by means of different metering devices (205). Preferably said metering devices are loss-in-weight gravimetric feeders. Alternatively, each flow (202) and (203) may be fed to the feed hopper (206) by means of the same metering device (205) (not represented in Fig. 5).

Alternatively, a previously made epoxidized elastomeric polymer may be fed to the extruder (201) through a feed hopper (206) by means of a metering device (205).

Fig. 5 shows also a degassing unit schematically indicated by reference sign (208) from which a flow of the gases possibly generated during extrusion (207) exits.

The layered material (204) is fed to the extruder through a feed hopper (206). Preferably, the layered material is fed at the first side port of the extruder (not represented in Fig. 5).

The resulting masterbatch (210) is discharged from the extruder (201), e.g. in the form of a continuous strand, by pumping it through an extruder die (209) and is conveyed to a cooling device (211). A gear pump (not represented in Fig. 1) may be provided before said extruder die (209). After cooling, the resulting masterbatch may be granulated by means of a grinding device (not represented in Fig. 5).

Alternatively, the masterbatch (210) is discharged from the extruder (201) in the form of a subdivided product by pumpimg it through an extruder die (209) which may be provided with a perforated die plate equipped with knives (not represented in Fig. 5). The obtained subdivided product may be, e.g. in a granular form, with an average diameter of the granules generally of from 0.5 mm to 3 mm, preferably of from 1 mm to 2 mm, and a length generally of from 1 mm to 4 mm, preferably of from 1.5 mm to 3 mm.

The process for producing the tyre according to the present invention may be carried out according to techniques and using apparatus that arc known in the art, as described, for example, in European Patents EP 199,064, and in patents US 4,872,822 or US 4,768,937, said process including at least one stage of manufacturing the crude tyre and at least one stage of vulcanizing this tyre.

More particularly, the process for producing the tyre comprises the steps of preparing, beforehand and separately from each other, a series of semi-finished products corresponding to the various structural elements of the tyre (carcass plies, belt structure, bead wires, fillers, sidewalls and tread band) which are then combined together using a suitable manufacturing machine. Next, the subsequent vulcanization step welds the abovementioned semi-finished

products together to give a monolithic block, i.e. the finished tyre.

The step of preparing the abovementioned semi-finished products will be preceded by a step of preparing and moulding the various crosslikable elastomeric compositions, of which said semi-finished products are made, according to conventional techniques.

The crude tyre thus obtained is then passed to the subsequent steps of moulding and vulcanization. To this end, a vulcanization mould is used which is designed to receive the tyre being processed inside a moulding cavity having walls which are countermoulded to define the outer surface of the tyre when the vulcanization is complete.

Alternative processes for producing a tyre or parts of a tyre without using semi-finished products are disclosed, for example, in the abovementioned European Patent Applications EP 928,680 and EP 928,702.

According to one preferred embodiment, said structural elements are formed by a plurality of coils of a continuous elongated element. Said elongated element may be produced, for example, by extruding the crosslinkable elastomeric composition above disclosed. Preferably, said structural elements are assembled onto a support.

For the purposes of the present description and of the claims which follow, the term "support" is used to indicate the following devices:

- an auxiliary drum having a cilindrical shape, said auxiliary drum preferably supporting a belt structure;
- a shaping drum having a substantially toroidal configuration, said shaping drum preferably supporting at least one carcass structure with a belt structure assembled thereon;
- a rigid support preferably shaped according to the inner configuration of the tyre.

Further details regarding said devices and the methods of forming and/or depositing the structural elements of the tyre on a support are described, for example, in International Patent Application WO 01/36185 and in European Patent EP 976,536 in the name of the Applicant, and in European Patent Applications: EP 968,814, EP 1,201,414 and EP 1,211,057.

The crude tyre can be moulded by introducing a pressurized fluid into the space defined by the inner surface of the tyre, so as to press the outer surface of the crude tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the crude tyre is pushed against the inner walls of the moulding cavity, thus obtaining the desired moulding. Alternatively, the moulding may be carried out without an inflatable vulcanization chamber, by providing inside the tyre a toroidal metal support shaped according to the configuration of the inner surface of the tyre to be obtained as described, for example, in Europen Patent EP 1,189,744.

At this point, the step of vulcanizing the crude tyre is carried out. To this end, the outer wall of the vulcanization mould is placed in contact with a heating fluid (generally steam) such that the outer wall reaches a maximum temperature generally of from 100°C to 230°C. Simultaneously the inner surface of the tyre is heated to the vulcanization temperature using the same pressurized fluid used to press the tyre against the walls of the moulding cavity, heated to a maximum temperature of from 100°C to 250°C. The time required to obtain a satisfactory degree of vulcanization throughout the mass of the elastomeric material may vary in general from 3 min to 90 min and depends mainly on the dimensions of the tyre. When the vulcanization is complete, the tyre is removed from the vulcanization mould.

The present invention will be further illustrated below by means of a number of preparation examples, which are given for purposely indicative purposes and without any limitation of this invention.

EXAMPLE 1

Preparation of the epoxidized elastomeric polymer in a twin-screw extruder

The amounts of the components used are given in Table 1 (the amounts of the various components are given in phr).

TABLE 1

| EXAMPLE | 1 |
|---|---|
| IR | 100 |
| Succinic anhydride | 3.60 |
| sodium percarbonate | 4.28 |

(continued)

| EXAMPLE | 1 |
|---|---|
| Water | 4.28 |
| (*): comparative.<br>IR: cis-1,4-polyisoprene (SKI3 - Nizhnekamskneftechim Export);<br>succinic anhydride: commercial product from Lonza;<br>sodium percarbonate: Oxyper® 131S from Solvay. | |

The IR rubber was obtained in the form of granules having an average particles size diameter of about 3 mm - 15 mm, by means of a rubber grinder. The so obtained granules, the succinic anhydride and the sodium percarbonate, both in granular form, were fed to the feed hopper of a co-rotating twin-screw extruder Maris TM40HT having a nominal screw diameter of 40 mm and a L/D ratio of 48. The maximum temperature of the extruder was 150°C.
The extrusion head was kept at a temperature of 70°C.

The obtained epoxidized polymer was discharged from the extruder in the form of a continuous strand, was cooled at room temperature and granulated. A sample of the obtained epoxidized polymer was subjected to UV fluorescence analysis below reported in order to evaluate the amount of the epoxy groups.

UV fluorescence analysis

The epoxidized elastomeric polymer obtained as above disclosed, was grounded into granules having an average particles size diameter of about 1 mm, by means of a rubber grinder.

The obtained granules were washed with water by means of a Soxhlet apparatus, in order to hydrolize the epoxy groups and to eliminate the reaction by-products.
Subsequently, the granules were dried in an oven, at 70°C, for about 12 hours.

The dried granules (300 mg) were dissolved into 10 ml of anhydrous pyridine and were heated at 80°C, under stirring, for 30 min. Subsequently, 120 mg of 4-bromoethyl-6,7-dimethoxycoumarin, were added and the solution was maintained at 80°C, under stirring, for 6 hours.

Afterward, the solution was cooled at room temperature and 30 ml of methanol were gentle added: the obtained precipitated elastomeric polymer was washed in methanol twice and dried in an oven, at 70°C, for about 12 hours.

To 20 mg of the above dried elastomeric polymer, 5 ml of toluene were added and the obtained solution was heated under gentle reflux, under stirring, for 2 hours, at 80°C. Subsequently, the solution was diluted with hexane and subjected to UV fluorescence analysis by means of spectrometer Jaswco A 235.

The amount of the epoxy groups was obtained by the signal at 320 nm in comparison to a calibration curve derived from 4-carboxymethyl-7-methoxycumarin. The amount of the epoxy groups was calculated by the following formula:

$$\text{mol\%} = \frac{A/B}{2} \times 100$$

wherein A is the concentration of the fluorescent groups and B is the concentration of the elastomeric polymer.

It has to be noted that, the above analysis, evaluate also the presence of groups which may result from the decomposition of the epoxy groups such as, for example, vicinal diols or ester groups.

The epoxidized elastomeric polymer includes 0.5 mol% of epoxy groups relative to the total number of moles of monomers present in the elastomeric polymer.

EXAMPLE 2

Preparation of the masterbatch in a twin-screw extruder

The masterbatch was prepared as follows by using a production plant as reported in Fig. 5.

The amounts of the components used are given in Table 2 (the amounts of the various components are given

in phr).

TABLE 2

| EXAMPLE | 2 |
|---|---|
| EPOXIDIZED-IR | 100 |
| Dellite® 67G | 20 |

EPOXIDIZED-IR: epoxidized cis-1,4-polyisoprene obtained in Example 1;
Dellite® 67G: organo-modified montmorillonite belonging to the smectite family (Laviosa Chimica Mineraria S.p.A.).

The epoxidized cis-1,4-polyisoprene, in granular form, was fed to the feed hopper of a co-rotating twin-screw extruder Maris TM40HT having a nominal screw diameter of 40 mm and a L/D ratio of 48.
The feeding was carried out by means of a loss-in-weight gravimetric feeder.
The organo-modified montmorillonite was added by means of a gravimetric loss-in-weight feeder at the first side port of the extruder (not represented in Fig. 5).
The maximum temperature of the extruder was 160°C. The extrusion head was kept at a temperature of 90°C.
The obtained masterbatch was discharged from the extruder in the form of a continuous strand, was cooled at room temperature in a cooling device and granulated.

EXAMPLE 3

Preparation of the masterbatch in a twin-screw extruder

The masterbatch was prepared as follows by using a production plant as reported in Fig. 5.
The amounts of the components used are given in Table 3 (the amounts of the various components are given in phr).

TABLE 3

| EXAMPLE | 3 |
|---|---|
| IR | 100 |
| Lonzabac® MB | 2 |
| Dellite® 67G | 20 |

IR: cis-1,4-polyisoprene (SKI3 - Nizhnekamskneftechim Export);
Lonzabac® MB: magnesium bis (2-carboxylatemono-peroxybenzoic acid)hexahydrate (Lonza);
Dellite® 67G: organo-modified montmorillonite belonging to the smectite family (Laviosa Chimica Mineraria S.p.A.).

The cis-1-4-pulyisoprene was obtained in the form of granules having an average particles size diameter of about 3 mm - 20 mm, by means of a rubber grinder. The so obtained granules, the Lonzabac® MB and the organo-modified montmorillonite, were fed to the feed hopper of a co-rotating twin-screw extruder Maris TM40HT having a nominal screw diameter of 40 mm and a L/D ratio of 48.
The maximum temperature in the extruder was 150°C. The extrusion head was kept at a temperature of 90°C.

The obtained masterbatch was discharged from the extruder in the form of a continuous strand, was cooled at room temperature in a cooling device and granulated.

The obtained masterbatch was subjected to UV fluorescence analysis operating as disclosed above.

The epoxidized elastomeric polymer includes 0.5 mol% of epoxy groups relative to the total number of moles of monomers present in the elastomeric polymer.

EXAMPLES 4-8

Preparation of the elastomeric compositions

The elastomeric compositions given in Table 4 were prepared as follows (the amounts of the various components are given in phr).

All the components, except sulphur and accelerator (DCBS), were mixed together in an internal mixer (model Pomini PL 1.6) for about 5 min (1st Step). As soon as the temperature reached 145±5°C, the elastomeric material was discharged. The sulphur and the accelerator, were then added and mixing was carried out in an open roll mixer (2nd Step).

TABLE 4

| EXAMPLE | 4 (*) | 5 (*) | 6 | 7 | 8 |
|---|---|---|---|---|---|
| 1st STEP | | | | | |
| IR | 100 | - | - | - | - |
| N326 | 40 | 40 | 40 | 40 | 40 |
| Zinc oxide | 4 | 4 | 4 | 4 | 4 |
| Stearic acid | 2 | 2 | 2 | 2 | 2 |
| Antioxidant | 2 | 2 | 2 | 2 | 2 |
| X50S® | 4 | 4 | 4 | 4 | 4 |
| Dellite® 67G | 20 | 20 | 20 | - | - |
| ENR 25 | - | 100 | - | - | - |
| EPOXIDIZED-IR | - | - | 100 | - | - |
| Masterbatch of Example 2 | - | - | - | 120 | - |
| Masterbatch of Example 3 | - | - | - | - | 120 |
| 2nd STEP | | | | | |
| DCBS | 1.8 | 1.8 | 1.8 | 1.8 | 1.8 |

(continued)

| 2nd STEP | | | | | |
|---|---|---|---|---|---|
| Sulphur | 2 | 2 | 2 | 2 | 2 |

(*): comparative.
IR: cis-1,4-polyisoprene (SKI3 - Nizhnekamskneftechim Export);
N326: carbon black;
Antioxidant: phenyl-p-phenylenediamine;
X50S®: silane coupling agent comprising 50% by weight of carbon black and 50% by weight of bis(3-triethoxysilylpropyl) tetrasulphide (Degussa-Hüls) ;
Dellite® 67G: organo-modified montmorillonite belonging to the smectite family (Laviosa Chimica Mineraria S.p.A.);
ENR 25: epoxidized natural rubber containing 25 mol% of epoxide groups (Epoxyprene® 25 from Guthrie);
EPOXIDIZED-IR: modified cis-1,4-polyisoprene obtained in Example 1;
DCBS (accelerator): benzothiazyl-2-dicyclohexyl-sulfenamide (Vulkacit® DZ/EGC - Bayer);

The Mooney viscosity ML(1+4) at 100°C was measured, according to Standard ISO 289-1:1994, on the non-crosslinked elastomeric compositions obtained as described above. The results obtained are given in Table 5.

The static mechanical properties according to Standard ISO 37:1994 as well as hardness in IRHD degrees at 23°C according to ISO standard 48:1994, were measured on samples of the abovementioned elastomeric compositions vulcanized at 170°C for 10 min. The results obtained are given in Table 5.

Table 5 also shows the dynamic mechanical properties, measured using an Instron dynamic device in the traction-compression mode according to the following methods. A test piece of the crosslinked elastomeric composition (vulcanized at 170°C for 10 min) having a cylindrical form (length = 25 mm; diameter = 12 mm), compression-preloaded up to a 10% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

TABLE 5

| EXAMPLE | 4 (*) | 5 (*) | 6 | 7 | 8 |
|---|---|---|---|---|---|
| Mooney viscosity ML (1+4) | 40.9 | 38.0 | 33.0 | 31.5 | 64.6 |
| STATIC MECHANICAL PROPERTIES | | | | | |
| 100% Modulus | 1.93 | 2.13 | 5.50 | 5.21 | 4.60 |
| 300% Modulus | 6.97 | 10.77 | 15.25 | 14.58 | 12.59 |
| DYNAMIC MECHANICAL PROPERTIES | | | | | |
| E' (23°C) | 7.26 | 11.7 | 13.39 | 14.39 | 17.12 |
| E' (70°C) | 4.84 | 7.30 | 9.19 | 10.00 | 11.57 |
| Tandelta (23°C) | 0.284 | 0.321 | 0.247 | 0.262 | 0.263 |
| Tandelta (70°C) | 0.174 | 0.210 | 0.157. | 0.161 | 0.207 |
| IRHD Hardness (23°C) | 62.5 | 67.9 | 77.6 | 79.8 | 82.3 |

(continued)

| DYNAMIC MECHANICAL PROPERTIES | | | | | |
|---|---|---|---|---|---|
| IRHD Hardness (70°C) | 55.7 | 55.9 | 72.4 | 73.1 | 70.5 |
| (*): comparative. | | | | | |

**Claims**

1. Tyre comprising at least one structural element obtained by crosslinking a crosslinkable elastomeric compositon comprising:

    (a) a crosslinkable elastomeric base comprising at least 10 phr of ($a_1$) at least one epoxidized elastomeric polymer including less than 10 mol% of epoxy groups relative to the total number of moles of monomers present in the elastomeric polymer;
    (b) from 2 phr to 50 phr of at least one layered material;

    wherein said layered material has an individual layer thickness of from 0.01 nm to 30 nm.

2. Tyre according to claim 1, wherein said layered material has an individual layer thickness of from 0.05 nm to 15 nm.

3. Tyre according to claim 1 or 2, comprising

    - a carcass structure of a substantially toroidal shape, having opposite lateral, edges associated with respective right-hand and left-hand bead structures, said bead structures comprising at
    - least one bead core and at,least one bead filler;
    - a belt structure applied in a radially external position with respect to said carcass structure;
    - a tread band radially superimposed on said belt structure;
    - a pair of sidewalls applied laterally on opposite sides with respect to said carcass structure;
    - at least one structural element selected from bead filler, sidewall insert, tread underlayer, tread base, obtained by crosslinking a crosslinkable elastomeric composition comprising:

        (a) a crosslinkable elastomeric base comprising at least 10 phr of ($a_1$) at least one epoxidized elastomeric polymer including less than 10 mol% of epoxy groups relative to the total number of moles of monomers present in the elastomeric polymer,
        (b) from 2 phr to 50 phr of at least one layered material.

4. Tyre according to any one of claims 1 to 3, wherein said crosslinkable elastomeric base comprises from 30 phr to 100 phr, of ($a_1$) at least one epoxidized elastomeric polymer.

5. Tyre according to any one of the preceding claims,
wherein said epoxidized elastomeric polymer includes from 0.1. mol% to 5 mol% of epoxy groups relative to the total number of moles of monomers present in the elastomeric polymer.

6. Tyre according to any one of the preceding claims,
wherein said layered material is present in an amount of from 5 phr to 30 phr.

7. Tyre according to any one of the preceding claim,
wherein said crosslinkable elastomeric bass (a) comprised ($a_2$) at least one second elastomeric polymer in an amount not higher than 90 phr.

8. Tyre according to claim 7, wherein said crosslinkable elastomeric base (a) comprises ($a_2$) at least one second elastomeric polymer in an amount of from 0 phr to 70 phr.

9. Tyre according to any one of the preceding claims,
wherein said sidewall insert extends radially from a position corresponding to the bead structure to a position corresponding to a tread lateral edge.

**10.** Tyre according to any one of the preceding claims, wherein said tread underlayer is a layer of crosslinked elastomeric composition applied in a radially internal position with respect to said tread band.

**11.** Tyre according to any one of the preceding claims, wherein said tread band is of cap and base construction and comprises a radially inner layer or tread base and a radially outer layer or tread cap.

**12.** Tyre according to any one of the preceding claims, wherein said structural element has a tensile modulus at 100% elongation (100% Modulus) not lower than 3 MPa.

**13.** Tyre according to claim 12, wherein said structural element has a tensile modulus at 100% elongation (100% Modulus) of from 4.5 MPa to 16 MPa.

**14.** Tyre according to any one of the preceding claims, wherein said structural element has a dynamic elastic modulus (E'), measured at 23°C, not lower than 12 MPa.

**15.** Tyre according to claim 14, wherein said structural element has a dynamite elastic modulus (E'), measured at 23°C, of from 13 MPa to 50 MPa.

**16.** Tyre according to any one of the preceding claims, wherein said structural element has a dynamic elastic modulus (E'), measured at 70°C, not lower than 8 MPa.

**17.** Tyre according to claim 16, wherein said structural element has a dynamic elastic modulus (E'), measured at **70°C,** of from 9 MPa to 40 MPa.

**18.** Tyre according to any one of the preceding claims, wherein said structural element has a IRHD hardness, measured at 23°C, not lower than 70.

**19.** tyre According to claim 18, wherein said structural element has a IRHD hardness, measured at 23°C, of from 75 to 95.

**20.** Tyre according to any one of the preceding claims, wherein said epoxy groups are introduced into the elastomeric polymer during the production of said elastomeric polymer by co-polymerization with at least one epoxy compound containing at least one ethylenic unsaturation.

**21.** Tyre according to any one of claims 1 to 19, wherein said epoxy groups are introduced into the elastomeric polymer, by reacting said elastomeric polymer, in solution, with at least one epoxidizing agent.

**22.** Tyre according to any one of claims 1 to 19, wherein said epoxy groups are introduced into the elastomeric polymer by means of a process comprising:

- feeding at least one elastomeric polymer and at least one epoxidizing agent to a mixing device;
- mixing and softening said mixture obtaining an epoxidized elastomeric polymer;
- discharching the obtained epoxidized elastomeric polymer from said mixing device.

**23.** Tyre according to any one of claims 1 to 19, wherein said epoxy groups are introduced into the elastomeric polymer by means of a process comprising:

- feeding at least one elastomeric polymer to a mixing device;
- feeding at least one hydrogen peroxide precursor to said mixing device;
- feeding at least one carboxylic acid or a derivative thereof to said mixing device;
- mixing and reacting, in the presence of water, said at least one elastomeric polymer with said at least one hydrogen peroxide precursor and said at least one carboxylic acid or a derivative thereof, to obtain an epoxidized elastomeric polymer;
- discharging the resulting epoxidized elastomeric polymer from said mixing device.

**24.** Tyre according to any one of the preceding claims, wherein the elastomeric polymer utilized in the production of said epoxidized Elastomeric polymer is selected from

sulphur-crosslinkable elastomeric polymers or copolymers with an unsaturated chain having a glass transition temperature below 20°C.

**25.** Tyre according to claim 24, wherein the elastomeric polymer utilized in the production of said epoxidized elastomeric polymer is selected from: natural or synthetic cis-1,4-polyisoprene, 3,4-polyisoprene, polybutadiene, optionally halogenated isoprene/isobutene copolymers, 1,3-butadiene/acrylonitrile copolymers, etyrene/1,3-butadiene copolymers, styrene/isoprene/1,3-butadiene copolymers, styrene/1,3-butadiene/acrylonitrile copolymers, or mixtures thereof.

**26.** Tyre according to any one of claims 1 to 24, wherein the elastomeric polymer utilized in the production of said epoxidized elastomeric polymer is selected from elastomeric polymers of one or more monoolefins with an olefinic comonomer and at least one diene, or derivatives thereof.

**27.** Tyre according to claim 26, wherein the elastomeric polymer utilized in the production of said epoxidized elastomeric polymer is selected from: ethylene/propylene/diene copolymers (EPDM); polyisobutene; butyl rubbers; halobutyl rubbers; or mixtures thereof.

**28.** Tyre according to any one of the preceding claim, wherein said layered material (b) is selected from phyllosilicates such as: smectites such as, montmorillonite, bentonite, nontronite, beidellite, volkonskoite, laponite, hectorite, saponite, sauconite, magadite, kenyasite, stevensite; vermiculite; halloisite; sericite; aluminate oxides; hydrotalcite; or mixtures thereof.

**29.** Tyre according to claim 28, wherein said layered material (b) is montmorillonite.

**30.** Tyre according to any one of the preceding claims, wherein said layered material (b) is treated with a compatibilizing agent.

**31.** Tyre according to claim 30, wherein said compatibilizing agent is selected from the quaternary ammonium or phosphonium salts having general formula (I):

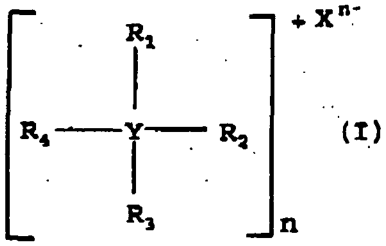

(I)

wherein:

- Y represents N or P;
- $R_1$, $R_2$, $R_3$ and $R_4$, which may be identical or different, represent a linear or branched $C_1$-$C_{20}$ alkyl or hydroxyalkyl group, a linear or branched $C_1$-$C_{20}$ alkenyl or hydroxyalkenyl group; a group - $R_5$-SH or -$R_5$-NH wherein $R_5$ represents a linear or branched $C_1$-$C_{20}$ alkylene group; a $C_6$-$C_{18}$ aryl group; a $C_7$-$C_{20}$ arylalkyl or alkylaryl group; a $C_5$-$C_{18}$ cycloalkyl group, said cycloalkyl group possibly containing hetero atom such as oxygen, nitrogen or sulphur;
- $X^{n-}$ represent an anion such as the chlorine ion, the sulphate ion or the phosphate ion;
- n represented 1, 2 or 3.

**32.** Tyre according to any one of the preceding claims, wherein said epoxidized elastomeric polymer is pre-mixed with said layered material in order to obtain a masterbatch.

**33.** Tyre according to claim 32, wherein said masterbatch is obtained by means of a process comprising the following steps:

- feeding at least one epoxidized elastomeric polymer and at least one layered material to a mixing device;
- mixing and softening said mixture so as to obtain a masterbatch;

- discharching the obtained masterbatch from said mixing device.

**34.** Tyre according to claim 32, wherein said masterbatch is obtained by means of a process comprising the following steps:

- feeding at least one elastomeric polymer, at least one epoxidizing agent, and at least one layered material, into a mixing device ;
- mixing and softening said mixture so as to obtain a masterbatch;
- discharching the obtained masterbatch from said mixing device.

**35.** Tyre according to claim 32, wherein said masterbatch is obtained by means of a process comprising the following steps:

- feeding at least one elastomeric polymer to a mixing device;
- feeding at least one hydrogen peroxide precursor to said mixing device;
- feeding at least one carboxylic acid or a derivative thereof to said mixing device;
- mixing and reacting, in the presence of water, said at least one elastomeric polymer with said at least one hydrogen peroxide precursor and said at least one carboxylic acid or a derivative thereof;
- feeding at least one layered inorganic material to said mixing device;
- mixing and softening said mixture obtaining a masterbatch;
- discharching the obtained masterbatch from said mixing device.

**36.** Tyre according to any one of the preceding claims,
wherein said crosslinkable elastomeric base (a) comprises ($a_2$) at least one second elastomeric polymer selected from:

- natural or synthetic cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof;
- ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof;
- elastomeric polymer of one or more monoolefins with an olefinic comonomer, such as ethylene/propylene copolymers (EPR), or mixtures thereof.

**37.** Tyre according to any one of the preceding claims,
wherein said crosslinkable Elastomeric composition comprises from 0 phr to 120 phr of (c) at least one carbon black reinforcing filler.

**38.** Tyre according to claim 37, wherein said crosslinkable elastomeric composition comprises from 20 phr to 90 phr of (c) at least one carbon black reinforcing filler.

**39.** Tyre according to any one of the preceding claims,
wherein said crosslinkable elastomeric composition comprises (d) at least one silane coupling agent.

**40.** Tyre according to claim 39, wherein said silane coupling agent (d) is selected from those having at least one hydrolizable silane group which may be identified by the following general formula (II):

$$(R)_3Si\text{-}C_nH_{2n}\text{-}X \qquad (II)$$

wherein the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, $-(S)_mC_nH_{2n}\text{-}Si\text{-}(R)_3$ or - S-COR in which m and n are integers between 1 and 6 inclusive and the groups R are defined as above.

**41.** Tyre according to claim 39 or 40, wherein said silane coupling agent (d) is present in the crosslinkable elastomeric composition in an amount of from 0 phr to 10 phr.

**42.** Tyre for vehicle wheels according to claim 41, wherein said silane coupling agent (d) is present in the crosslinkable elastomeric composition in an amount of from 0.5 phr to 5 phr.

**43.** Tyre according to any one of the preceding claims,
wherein at least one additional reinforcing filler is present in said crosslinkable elastomeric composition in an amount of from 0 phr to 120 phr.

**44.** Tyre according to claim 43, wherein said additional reinforcing filler is silica.

**45.** Tyre for vehicle wheels according to claim 44, wherein at least one further silane coupling agents (d) according to claim 40 is present.

**46.** Crosslinkable elastomeric composition comprising:

(a) a crosslinkable elastomeric base comprising at least 10 phr of ($a_1$) at least one epoxidized elastomeric polymer including less than 10 mol% of epoxy groups relative to the total number of moles of monomers present in the elastomeric polymer;
(b) from 2 phr to 50 phr of at least one layered material.

**47.** Crosslinkable elastomeric composition according to claim 46, wherein said crosslinkable elastomeric base comprises from 30 phr to 100 phr, of ($a_1$) at least one epoxidized elastomeric polymer.

**48.** Crosslinkable Elastomeric composition according to claim 46 or 47, wherein said epoxidized elastomeric polymer includes from 0.1 mol% to 5 mol% of epoxy groups relative to the total number of moles of monomers present in the elastomeric polymer.

**49.** Crosslinkable elastomeric composition according to any one of claims 46 to 48, wherein said layered material is present in an amount of from 5 phr to 30 phr.

**50.** Crosslinkable elastomeric composition according to any one of claims 46 to 49, wherein said layered material has an individual layer thickness of from 0.01 nm to 30 nm.

**51.** Crosslinkable elastomeric composition according to claim 50, wherein said layered material has an individual layer thickness of from 0.05 nm to 15 nm,

**52.** Crosslinkable elastomeric composition according to any one of claims 46 to 51, wherein said epoxidized elastomeric polymer is defined according to any one of claims 20 to 27.

**53.** Crosslinkable elastomeric composition according to any one of claims 46 to 52, wherein said layered material is defined according to claim 28 or 29.

**54.** Crosslinkable elastomeric composition according to claim 53, wherein said layered material is added as such.

**55.** Crosslinkable elastomeric composition according to claim 53, wherein said layered material is added after being treated with at least one compatibilizing agent which is defined according to claim 31.

**56.** Crosslinkable elastomeric composition according to any one of claims 46 to 55, wherein said epoxidized elastomeric polymer is pre-mixed with said layered material in order to obtain a masterbatch.

**57.** Crosslinkable elastomeric composition according to claim 56, wherein said masterbatch is obtained according to any one of claims 33 to 35.

**58.** Crosslinkable elastomeric composition according to any one of claims 46 to 57, wherein said crosslinkable elastomeric base (a) comprises ($a_2$) at least one second elastomeric polymer defined according to claim 36.

**59.** Crosslinkable elastomeric composition according to any one of claims 46 to 58, wherein said crosslinkable elastomeric composition comprises at least one carbon black defined according to claim 37 or 38.

**60.** Crosslinkable elastomeric composition according to any one of claims 46 to 59, wherein said crosslinkable elastomeric composition comprises at least one silane coupling agent (d) defined according to any one of claims 40 to 42.

**61.** Crosslinkable elastomeric composition according to any one of claims 46 to wherein at least one additional reinforcing filler is present in an amount of from 0 phr to 120 phr.

**62.** Crosslinkable elastomeric composition according to claim 61, therein the additional reinforcing filler is silica.

**63.** Crosslinkable elastomeric composition according to claim 62, wherein at least one silane coupling agent (d) defined according to any one of claims 40 to 42 is present.

**64.** Crosslinked manufactured article obtained by crosslinking a crosslinkable elastomeric composition defined according to any one of claims 46 to 63.

**Patentansprüche**

**1.** Reifen mit wenigstens einem Bauelement, das durch Vernetzen einer vernetzbaren elastomeren Mischung erhalten wird, die

(a) eine vernetzbare elastomere Basis mit wenigstens 10 phr wenigstens eines epoxidierten elastomeren Polymers ($a_1$), das weniger als 10 Mol% Epoxygruppen bezogen auf die Gesamtmolzahl von in dem elastomeren Polymer vorhandenen Monomeren einschließt, und
(b) 2 phr bis 50 phr wenigstens eines geschichteten Materials aufweist, das eine Einzelschichtdicke von 0,01 nm bis 30 nm hat.

**2.** Reifen nach Anspruch 1, bei welchem das geschichtete Material eine Einzelschichtdicke von 0,05 nm bis 15 nm aufweist.

**3.** Reifen nach Anspruch 1 oder 2

- mit einem im Wesentlichen eine Torusform aufweisenden Karkassenaufbau, der gegenüberliegende Seitenränder hat, denen ein rechtsseitiger bzw. linksseitiger Wulstaufbau zugeordnet ist, von denen jeder wenigstens einen Wulstkern und wenigstens einen Wulstfüller hat,
- mit einem in einer radial äußeren Position bezogen auf den Karkassenaufbau aufgebrachten Gurtaufbau,
- mit einem radial auf den Gurtaufbau aufgebrachten Laufflächenband,
- mit einem Paar von seitlich auf gegenüberliegenden Seiten bezüglich des Karkassenaufbaus angebrachten Seitenwänden und
- mit wenigstens einem aus Wulstfüller, Seitenwandeinlage, Laufflächenunterschicht, Laufflächenbasis ausgewählten Bauelement, das durch Vernetzen einer vernetzbaren elastomeren Mischung erhalten wird, die

  (a) eine vernetzbare elastomere Basis mit wenigstens 10 phr wenigstens eines epoxidierten elastomeren Polymers ($a_1$), das weniger als 10 Mol% Epoxygruppen bezogen auf die Gesamtmolzahl von Monomeren einschließt, die in dem elastomeren Polymer vorhanden sind, und
  (b) 2 phr bis 50 phr wenigstens eines geschichteten Materials aufweist.

**4.** Reifen nach einem der Ansprüche 1 bis 3, bei welchem die vemetzbare elastomere Basis 30 phr bis 100 phr wenigstens eines epoxidierten elastomeren Polymers ($a_1$) aufweist.

**5.** Reifen nach einem der vorhergehenden Ansprüche, bei welchem das epoxidierte elastomere Polymer 0,1 Mol% bis 5 Mol% Epoxygruppen bezogen auf die Gesamtmolzahl von in dem elastomeren Polymer vorhandenen Monomeren aufweist.

**6.** Reifen nach einem der vorhergehenden Ansprüche, bei welchem das geschichtete Material in einer Menge von 5 phr bis 30 phr vorhanden ist.

**7.** Reifen nach einem der vorhergehenden Ansprüche, bei welchem die vemetzbare elastomere Basis (a) wenigstens ein zweites elastomeres Polymer ($a_2$) in einer Menge von nicht mehr als 90 phr aufweist.

**8.** Reifen nach Anspruch 7, bei welchem die vemetzbare elastomere Basis (a) wenigstens ein zweites elastomeres Polymer ($a_2$) in einer Menge von 0 phr bis 70 phr aufweist.

**9.** Reifen nach einem der vorhergehenden Ansprüche, bei welchem sich die Seitenwandeinlage radial von einer Position, die dem Wulstaufbau entspricht, zu einer Position erstreckt, die dem Laufflächenseitenrand entspricht.

**10.** Reifen nach einem der vorhergehenden Ansprüche, bei welchem die Laufflächenunterschicht eine Schicht aus einer vernetzten elastomeren Mischung ist, die in einer radial inneren Position bezüglich des Laufflächenbandes aufgebracht ist.

**11.** Reifen nach einem der vorhergehenden Ansprüche, bei welchem das Laufflächenband einen Kappen-Basis-Aufbau sowie eine radial innere Schicht oder Laufflächenbasis und eine radial äußere Schicht oder Laufflächenkappe aufweist.

**12.** Reifen nach einem der vorhergehenden Ansprüche, bei welchem das Bauelement einen Zugmodul bei 100% Dehnung (100%-Modul) von nicht weniger als 3 MPa hat.

**13.** Reifen nach Anspruch 12, bei welchem das Bauelement einen Zugmodul bei 100% Dehnung (100%-Modul) von 4,5 MPa bis 16 MPa hat.

**14.** Reifen nach einem der vorhergehenden Ansprüche, bei welchem das Bauelement einen bei 23°C gemessenen dynamischen Elastizitätsmodul (E') von nicht weniger als 12 MPa hat.

**15.** Reifen nach Anspruch 14, bei welchem das Bauelement einen bei 23°C gemessenen dynamischen Elastizitätsmodul (E') von 13 MPa bis 50 MPa hat.

**16.** Reifen nach einem der vorhergehenden Ansprüche, bei welchem das Bauelement einen bei 70°C gemessenen dynamischen Elastizitätsmodul (E') von nicht weniger als 8 MPa hat.

**17.** Reifen nach Anspruch 16, bei welchem das Bauelement einen bei 70°C gemessenen dynamischen Elastizitätsmodul (E') von 9 MPa bis 40 MPa hat.

**18.** Reifen nach einem der vorhergehenden Ansprüche, bei welchem das Bauelement eine bei 23°C gemessene IRHD-Härte von nicht weniger als 70 hat.

**19.** Reifen nach Anspruch 18, bei welchem das Bauelement eine bei 23°C gemessene IRHD-Härte von 75 bis 95 hat.

**20.** Reifen nach einem der vorhergehenden Ansprüche, bei welchem die Epoxygruppen in das elastomere Polymer während der Herstellung des elastomeren Polymers durch Copolymerisation mit wenigstens einer Epoxyverbindung eingeführt wird, die wenigstens eine ethylenische Unsättigung enthält.

**21.** Reifen nach einem der Ansprüche 1 bis 19, bei welchem die Epoxygruppen in das elastomere Polymer dadurch eingeführt werden, dass das elastomere Polymer in Lösung mit wenigstens einem Epoxidiermittel reagieren gelassen wird.

**22.** Reifen nach einem der Ansprüche 1 bis 19, bei welchem die Epoxygruppen in das elastomere Polymer mit Hilfe eines Verfahrens eingeführt werden, bei welchem

- wenigstens ein elastomeres Polymer und wenigstens ein Epoxidiermittel in eine Mischeinrichtung eingeführt werden,
- die Mischung gemischt und weichgemacht wird, wodurch ein epoxidiertes elastomeres Polymer erhalten wird, und
- das erhaltene epoxidierte elastomere Polymer aus der Mischeinrichtung abgeführt wird.

**23.** Reifen nach einem der Ansprüche 1 bis 19, bei welchem die Epoxygruppen in das elastomere Polymer mit Hilfe eines Verfahrens eingeführt werden, bei welchem

- wenigstens ein elastomeres Polymer in eine Mischeinrichtung eingeführt wird,

- wenigstens ein Wasserstoffperoxidvorläufer in die Mischeinrichtung eingeführt wird,
- wenigstens eine Carbonsäure oder ein Derivat von ihr in die Mischeinrichtung eingeführt wird,
- bei Vorhandensein von Wasser das wenigstens eine elastomere Polymer mit dem wenigstens einen Wasserstoffperoxidvorläufer und die wenigstens eine Carbonsäure oder ihr Derivat gemischt und reagieren gelassen werden, um ein epoxidiertes elastomeres Polymer zu erhalten, und
- das sich ergebende epoxidierte elastomere Polymer aus der Mischeinrichtung abgeführt wird.

**24.** Reifen nach einem der vorhergehenden Ansprüche, bei welchem das bei der Herstellung des epoxidierten elastomeren Polymers verwendete elastomere Polymer aus schwefelvernetzbaren elastomeren Polymeren oder Copolymeren mit einer ungesättigten Kette und einer Glasübergangstemperatur unter 20°C ausgewählt wird.

**25.** Reifen nach Anspruch 24, bei welchem das bei der Herstellung des epoxidierten elastomeren Polymers verwendete elastomere Polymer aus natürlichem oder synthetischem cis-1,4-Polyisopren; 3-4-Polyisopren; Polybutadien; fakultativ halogenierten Isopren-Isobuten-Copolymeren; 1,3-Butadien-Acrylnitril-Copolymeren; Styrol-1,3-Butadien-Copolymeren; Styrol-Isopren-1,3-Butadien-Copolymeren; Styrol-1,3-Butadien-Acrylnitril-Copolymeren oder Mischungen davon ausgewählt wird.

**26.** Reifen nach einem der Ansprüche 1 bis 24, bei welchem das bei der Herstellung des epoxidierten elastomeren Polymers verwendete elastomere Polymer aus elastomeren Polymeren von einem oder mehreren Monoolefinen mit einem olefinischen Comonomer und wenigstens einem Dien oder Derivaten davon ausgewählt wird.

**27.** Reifen nach Anspruch 26, bei welchem das bei der Herstellung des epoxidierten elastomeren Polymers verwendete elastomere Polymer aus Ethylen-Propylen-Dien-Copolymeren (EPDM); Polyisobuten; Butylkautschuken; Halobutylkautschuken oder Mischungen davon ausgewählt wird.

**28.** Reifen nach einem der vorhergehenden Ansprüche, bei welchem das geschichtete Material (b) aus Phyllosilicaten ausgewählt wird, wie Smektiten, beispielsweise Montmorillonit, Bentonit, Nontronit, Beidellit, Volkonskoit, Laponit, Hectorit, Saponit, Sauconit, Magadit, Kenyasit, Stevensit; Vermiculit; Halloisit; Sericit; Aluminiumoxiden; Hydrotalkit oder Mischungen davon.

**29.** Reifen nach Anspruch 28, bei welchem das geschichtete Material (b) Montmorillonit ist.

**30.** Reifen nach einem der vorhergehenden Ansprüche, bei welchem das geschichtete Material (b) mit einem Kompatibilisierungsmittel behandelt ist.

**31.** Reifen nach Anspruch 30, bei welchem das Kompatibilisierungsmittel aus quaternären Ammonium- oder Phosphoniumsalzen mit der allgemeinen Formel (I):

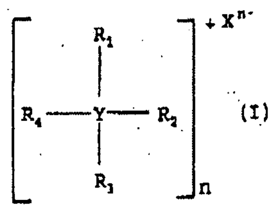

(I)

ausgewählt wird, wobei

- Y für N oder P steht,
- $R_1$, $R_2$, $R_3$ und $R_4$, die identisch oder verschieden sein können, für eine lineare oder verzweigte $C_1$- bis $C_{20}$-Alkyl- oder Hydroxyalkylgruppe, für eine lineare oder verzweigte $C_1$- bis $C_{20}$-Alkenyl- oder Hydroxyalkenylgruppe, für eine Gruppe $R_5$-SH oder -$R_5$-NH, wenn $R_5$ eine lineare oder verzweigte $C_1$- bis $C_{20}$-Alkylengruppe darstellt, für eine $C_6$- bis $C_{18}$-Arylgruppe, für eine $C_7$- bis $C_{20}$-Arylalkyl- oder Alkylarylgruppe und für eine $C_5$- bis $C_{18}$-Cycloalkylgruppe stehen, die gegebenenfalls ein Heteroatom, wie Sauerstoff, Stickstoff oder Schwefel enthält,
- $X^{n-}$ für ein Anion steht, beispielsweise das Chlorion, das Sulfation oder das Phosphation, und
- n für 1, 2 oder 3 steht.

**32.** Reifen nach einem der vorhergehenden Ansprüche, bei welchem das epoxidierte elastomere Polymer mit dem geschichteten Material vorgemischt wird, um eine Vormischung zu erhalten.

**33.** Reifen nach Anspruch 32, bei welchem die Vormischung mit Hilfe eines Verfahrens erhalten wird, das die folgenden Schritte aufweist:

- Zuführen wenigstens eines epoxidierten elastomeren Polymers und wenigstens eines geschichteten Materials zu einer Mischeinrichtung,
- Mischen und Weichmachen der Mischung, um so eine Vormischung zu erhalten, und
- Abführen der erhaltenen Vormischung aus der Mischeinrichtung.

**34.** Reifen nach Anspruch 32, bei welchem die Vormischung mit Hilfe eines Verfahrens erhalten wird, das die folgenden Schritte aufweist:

- Zuführen wenigstens eines elastomeren Polymers, wenigstens eines Epoxidiermittels und wenigstens eines geschichteten Materials zu einer Mischeinrichtung,
- Mischen und Weichmachen der Mischung, um so eine Vormischung zu erhalten, und
- Abführen der erhaltenen Vormischung aus der Mischeinrichtung.

**35.** Reifen nach Anspruch 32, bei welchem die Vormischung mit Hilfe eines Verfahrens erhalten wird, das die folgenden Schritte aufweist:

- Zuführen wenigstens eines elastomeren Polymers zu einer Mischeinrichtung,
- Zuführen wenigstens eines Wasserstoffperoxidvorläufers zu der Mischeinrichtung,
- Zuführen wenigstens einer Carbonsäure oder eines Derivats von ihr zu der Mischeinrichtung,
- bei Vorhandensein von Wasser Mischen und Reagierenlassen des wenigstens einen elastomeren Polymers mit dem wenigstens einen Wasserstoffperoxidvorläufer und der wenigstens einen Carbonsäure oder einem Derivat von ihr,
- Zuführen wenigstens eines geschichteten anorganischen Materials zu der Mischeinrichtung,
- Mischen und Weichmachen der Mischung, um eine Vormischung zu erhalten, und
- Abführen der erhaltenen Vormischung aus der Mischeinrichtung.

**36.** Reifen nach einem der vorhergehenden Ansprüche, bei welchem die vernetzbare elastomere Basis (a) wenigstens ein zweites elastomeres Polymer ($a_2$) aufweist, das ausgewählt wird aus

- natürlichem oder synthetischem cis-1,4-Polyisopren; 3-4-Polyisopren; Polybutadien; fakultativ halogenierten Isopren-Isobuten-Copolymeren; 1,3-Butadien-Acrylnitril-Copolymeren; Styrol-1,3-Butadien-Copolymeren; Styrol-Isopren-1,3-Butadien-Copolymeren; Styrol-1,3-Butadien-Acrylnitril-Copolymeren oder Mischungen davon;
- Ethylen-Propylen-Copolymeren (EPR) oder Ethylen-Propylen-Dien-Copolymeren (EPDM); Polyisobuten; Butylkautschuken; Halobutylkautschuken, insbesondere Chlorbutyl- oder Brombutylkautschuken, oder Mischungen davon; und
- einem elastomeren Polymer von einem oder mehreren Monoolefinen mit einem olefinischen Comonomer, wie Ethylen-Propylen-Copolymeren (EPR) oder Mischungen davon.

**37.** Reifen nach einem der vorhergehenden Ansprüche, bei welchem die vemetzbare elastomere Mischung 0 phr bis 120 phr wenigstens eines Rußverstärkungsfüllstoffes (c) aufweist.

**38.** Reifen nach Anspruch 37, bei welchem die vemetzbare elastomere Mischung 20 phr bis 90 phr wenigstens eines Rußverstärkungsfüllstoffes (c) aufweist.

**39.** Reifen nach einem der vorhergehenden Ansprüche, bei welchem die vemetzbare elastomere Mischung wenigstens ein Silanhaftmittel (d) aufweist.

**40.** Reifen nach Anspruch 39, bei welchem das Silanhaftmittel (d) aus denen ausgewählt wird, die wenigstens eine hydrolisierbare Silangruppe haben, die durch folgende allgemeine Formel (II) ausgedrückt werden kann:

$$(R)_3Si\text{-}C_nH_{2n}\text{-}X \qquad (II),$$

wobei die Gruppen R, die identisch oder verschieden sein können, aus Alkyl-, Alkoxy- oder Aryloxygruppen oder aus Halogenatomen unter der Bedingung ausgewählt werden, dass wenigstens eine der Gruppen R eine Alkoxy- oder Aryloxygruppe ist; n eine ganze Zahl zwischen 1 und 6 einschließlich ist; X eine aus Nitroso-, Mercapto-, Amino-, Epoxy-, Vinyl-, Imid-, Chlor-, $-(S)_mC_nH_{2n}-Si-(R)_3$ oder -S-COR - ausgewählte Gruppe ist, bei der m und n ganze Zahlen zwischen 1 und 6 einschließlich sind und die Gruppen R wie vorstehend definiert werden.

**41.** Reifen nach Anspruch 39 oder 40, bei welchem das Silanhaftmittel (d) in der vernetzbaren elastomeren Mischung in einer Menge von 0 phr bis 10 phr vorhanden ist.

**42.** Reifen für Fahrzeugräder nach Anspruch 41, bei welchem das Silanhaftmittel (d) in der vernetzbaren elastomeren Mischung in einer Menge von 0,5 phr bis 5 phr vorhanden ist.

**43.** Reifen nach einem der vorhergehenden Ansprüche, bei welchem in der vernetzbaren elastomeren Mischung wenigstens ein zusätzlicher Verstärkungsfüllstoff in einer Menge von 0 phr bis 120 phr vorhanden ist.

**44.** Reifen nach Anspruch 43, bei welchem der zusätzliche Verstärkungsfüllstoff Siliciumdioxid ist.

**45.** Reifen für Fahrzeugräder nach Anspruch 44, bei welchem wenigstens ein weiteres Silanhaftmittel (d) nach Anspruch 40 vorhanden ist.

**46.** Vemetzbare elastomere Mischung

(a) mit einer vernetzbaren elastomeren Basis, die wenigstens 10 phr wenigstens eines epoxidierten elastomeren Polymers ($a_1$) aufweist, das weniger als 10 Mol% Epoxygruppen bezogen auf die Gesamtmolzahl von in dem elastomeren Polymer vorhandenen Monomeren einschließt, und
(b) mit 2 phr bis 50 phr wenigstens eines geschichteten Materials.

**47.** Vemetzbare elastomere Mischung nach Anspruch 46, bei welcher die vemetzbare elastomere Basis 30 phr bis 100 phr wenigstens eines epoxidierten elastomeren Polymers ($a_1$) aufweist.

**48.** Vemetzbare elastomere Mischung nach Anspruch 46 oder 47, bei welcher das epoxidierte elastomere Polymer 0,1 Mol% bis 5 Mol% Epoxygruppen bezogen auf die Gesamtmolzahl von in dem elastomeren Polymer vorhandenen Monomeren aufweist.

**49.** Vemetzbare elastomere Mischung nach einem der Ansprüche 46 bis 48, bei welcher das geschichtete Material in einer Menge von 5 phr bis 30 phr vorhanden ist.

**50.** Vemetzbare elastomere Mischung nach einem der Ansprüche 46 bis 49, bei welcher das geschichtete Material eine Einzelschichtdicke von 0,01 nm bis 30 nm hat.

**51.** Vemetzbare elastomere Mischung nach Anspruch 50, bei welcher das geschichtete Material eine Einzelschichtdicke von 0,05 nm bis 15 nm hat.

**52.** Vemetzbare elastomere Mischung nach einem der Ansprüche 46 bis 51, bei welcher das epoxidierte elastomere Polymer nach einem der Ansprüche 20 bis 27 definiert ist.

**53.** Vemetzbare elastomere Mischung nach einem der Ansprüche 46 bis 52, bei welcher das geschichtete Material nach Anspruch 28 oder 29 definiert ist.

**54.** Vemetzbare elastomere Mischung nach Anspruch 53, bei welcher das geschichtete Material als solches zugegeben wird.

**55.** Vemetzbare elastomere Mischung nach Anspruch 53, bei welcher das geschichtete Material zugegeben wird, nachdem es mit wenigstens einem Kompatibilisierungsmittel behandelt worden ist, das nach Anspruch 31 definiert ist.

**56.** Vemetzbare elastomere Mischung nach einem der Ansprüche 46 bis 55, bei welcher das epoxidierte elastomere Polymer mit dem geschichteten Material vorgemischt wird, um eine Vormischung zu erhalten.

**57.** Vemetzbare elastomere Mischung nach Anspruch 56, bei welcher die Vormischung nach einem der Ansprüche 33 bis 35 erhalten wird.

**58.** Vemetzbare elastomere Mischung nach einem der Ansprüche 46 bis 57, bei welcher die vemetzbare elastomere Basis (a) wenigstens ein zweites elastomeres Polymer ($a_2$) aufweist, das nach Anspruch 36 definiert ist.

**59.** Vemetzbare elastomere Mischung nach einem der Ansprüche 46 bis 58, die wenigstens einen Ruß aufweist, der nach Anspruch 37 oder 38 definiert ist.

**60.** Vernetzbare elastomere Mischung nach einem der Ansprüche 46 bis 59, die wenigstens ein Silanhaftmittel (d) aufweist, das nach einem der Ansprüche 40 bis 42 definiert ist.

**61.** Vernetzbare elastomere Mischung nach einem der Ansprüche 46 bis 60, bei welcher wenigstens ein zusätzlicher Verstärkungsfüllstoff in einer Menge von 0 phr bis 120 phr vorhanden ist.

**62.** Vernetzbare elastomere Mischung nach Anspruch 61, bei welcher der zusätzliche Verstärkungsfüllstoff Siliciumdioxid ist.

**63.** Vernetzbare elastomere Mischung nach Anspruch 62, bei welcher wenigstens eine Silanhaftmittel (d) vorhanden ist, das nach einem der Ansprüche 40 bis 42 definiert ist.

**64.** Vernetzter gefertigter Gegenstand, der durch Vernetzen einer vernetzbaren elastomeren Mischung erhalten ist, die nach einem der Ansprüche 46 bis 63 definiert ist.

**Revendications**

**1.** Pneumatique comportant au moins un élément de structure obtenu par réticulation d'une composition élastomère réticulable qui comprend :

a) une base élastomère réticulable comprenant au moins 10 pcc (parties pour cent parties de caoutchouc) d'au moins un polymère élastomère époxydé ($a_1$) qui contient moins de 10 % en moles de groupes époxy, par rapport au nombre total de moles de monomères présentes dans le polymère élastomère ;
b) et de 2 à 50 pcc d'au moins un matériau à structure en couches ;

dans lequel les couches individuelles de ce matériau à structure en couches présentent une épaisseur de 0,01 à 30 nm.

**2.** Pneumatique conforme à la revendication 1, dans lequel les couches individuelles dudit matériau à structure en couches présentent une épaisseur de 0,05 à 15 nm.

**3.** Pneumatique conforme à la revendication 1 ou 2, comprenant :

- une structure de carcasse de forme sensiblement toroïdale, dont les bords opposés sont respectivement associés à des structures de talon droit et de talon gauche, lesquelles structures de talon comprennent chacune au moins une tringle et au moins un bourrage ;
- une structure de ceinture, placée en situation radialement externe par rapport à ladite structure de carcasse ;
- une bande de roulement, placée radialement par-dessus ladite structure de ceinture ;
- et une paire de flancs, placés latéralement sur les bords opposés de ladite structure de carcasse ;
- et au moins un élément de structure, choisi parmi un bourrage, un insert de flanc, une sous-couche de bande de roulement et une base de bande de roulement, qui est obtenu par réticulation d'une composition élastomère réticulable comprenant :

a) une base élastomère réticulable comprenant au moins 10 pcc d'au moins un polymère élastomère époxydé ($a_1$) qui contient moins de 10 % en moles de groupes époxy, par rapport au nombre total de moles de monomères présentes dans le polymère élastomère ;
b) et de 2 à 50 pcc d'au moins un matériau à structure en couches.

4. Pneumatique conforme à l'une des revendications 1 à 3, dans lequel ladite base élastomère réticulable comprend de 30 à 100 pcc d'au moins un polymère élastomère époxydé ($a_1$).

5. Pneumatique conforme à l'une des revendications précédentes,
dans lequel ledit polymère élastomère époxydé contient de 0,1 à 5 % en moles de groupes époxy, par rapport au nombre total de moles de monomères présentes dans le polymère élastomère.

6. Pneumatique conforme à l'une des revendications précédentes,
dans lequel ledit matériau à structure en couches se trouve présent en une proportion de 5 à 30 pcc.

7. Pneumatique conforme à l'une des revendications précédentes,
dans lequel ladite base élastomère réticulable (a) comprend au moins un deuxième polymère élastomère ($a_2$), présent en une proportion d'au plus 90 pcc.

8. Pneumatique conforme à la revendication 7, dans lequel ladite base élastomère réticulable (a) comprend au moins un deuxième polymère élastomère ($a_2$), présent en une proportion de 0 à 70 pcc.

9. Pneumatique conforme à l'une des revendications précédentes,
dans lequel ledit insert de flanc s'étend, dans la direction radiale, depuis une position correspondant à la structure de talon jusqu'à une position correspondant à un bord de la bande de roulement.

10. Pneumatique conforme à l'une des revendications précédentes,
dans lequel ladite sous-couche de bande de roulement est une couche d'une composition élastomère réticulée, qui est placée en situation radialement interne par rapport à ladite bande de roulement.

11. Pneumatique conforme à l'une des revendications précédentes,
dans lequel ladite bande de roulement présente une structure constituée d'un dessus et d'une base, et comporte donc une couche radialement interne, soit la base de la bande de roulement, et une couche radialement externe, soit le dessus de la bande de roulement.

12. Pneumatique conforme à l'une des revendications précédentes,
dans lequel ledit élément de structure présente un module de traction, à 100 % d'allongement (module à 100 %) d'au moins 3 MPa.

13. Pneumatique conforme à la revendication 12, dans lequel ledit élément de structure présente un module de traction, à 100 % d'allongement (module à 100 %) de 4,5 à 16 MPa.

14. Pneumatique conforme à l'une des revendications précédentes,
dans lequel ledit élément de structure présente un module élastique dynamique E', mesuré à 23 °C, d'au moins 12 MPa.

15. Pneumatique conforme à la revendication 14, dans lequel ledit élément de structure présente un module élastique dynamique E', mesuré à 23 °C, de 13 à 50 MPa.

16. Pneumatique conforme à l'une des revendications précédentes,
dans lequel ledit élément de structure présente un module élastique dynamique E', mesuré à 70 °C, d'au moins 8 MPa.

17. Pneumatique conforme à la revendication 16, dans lequel ledit élément de structure présente un module élastique dynamique E', mesuré à 70 °C, de 9 à 40 MPa.

18. Pneumatique conforme à l'une des revendications précédentes,
dans lequel ledit élément de structure présente une dureté IRHD, mesurée à 23 °C, d'au moins 70.

19. Pneumatique conforme à la revendication 18, dans lequel ledit élément de structure présente une dureté IRHD, mesurée à 23 °C, de 75 à 95.

20. Pneumatique conforme à l'une des revendications précédentes,
dans lequel lesdits groupes époxy ont été introduits dans le polymère élastomère au cours de la préparation de ce

polymère élastomère, par copolymérisation avec au moins un composé de type époxyde doté d'au moins une insaturation éthylénique.

**21.** Pneumatique conforme à l'une des revendications 1 à 19, dans lequel lesdits groupes époxy ont été introduits dans le polymère élastomère par réaction de ce polymère élastomère, en solution, avec au moins un agent d'époxydation.

**22.** Pneumatique conforme à l'une des revendications 1 à 19, dans lequel lesdits groupes époxy ont été introduits dans le polymère élastomère par mise en oeuvre d'un procédé qui comporte :

- le fait d'envoyer au moins un polymère élastomère et au moins un agent d'époxydation dans un dispositif mélangeur ;
- le fait de mélanger ces composants et de faire ramollir le mélange obtenu, ce qui donne un polymère élastomère époxydé ;
- et le fait de décharger dudit dispositif mélangeur le polymère élastomère époxydé ainsi obtenu.

**23.** Pneumatique conforme à l'une des revendications 1 à 19, dans lequel lesdits groupes époxy ont été introduits dans le polymère élastomère par mise en oeuvre d'un procédé qui comporte :

- le fait d'envoyer au moins un polymère élastomère dans un dispositif mélangeur ;
- le fait d'envoyer dans ce dispositif mélangeur au moins un précurseur de peroxyde d'hydrogène ;
- le fait d'envoyer dans ce dispositif mélangeur au moins un acide carboxylique, ou un dérivé d'un tel acide ;
- le fait de mélanger et de faire réagir, en présence d'eau, ledit polymère élastomère au nombre d'au moins un avec ledit précurseur de peroxyde d'hydrogène au nombre d'au moins un et ledit acide carboxylique ou dérivé d'un tel acide au nombre d'au moins un, ce qui donne un polymère élastomère époxydé ;
- et le fait de décharger dudit dispositif mélangeur le polymère élastomère époxydé ainsi obtenu.

**24.** Pneumatique conforme à l'une des revendications précédentes, pour lequel le polymère élastomère employé dans la préparation dudit polymère élastomère époxydé a été choisi parmi les polymères et copolymères élastomères vulcanisables à l'aide de soufre, à chaînes insaturées, dont la température de transition vitreuse est inférieure à 20°C.

**25.** Pneumatique conforme à la revendication 24, pour lequel le polymère élastomère employé dans la préparation dudit polymère élastomère époxydé a été choisi parmi les suivants : cis-1,4-polyisoprène naturel ou synthétique, 3,4-polyisoprène, polybutadiène, copolymères d'isoprène et d'isobutène, éventuellement halogénés, copolymères de buta-1,3-diène et d'acrylonitrile, copolymères de buta-1,3-diène et de styrène, copolymères de buta-1,3-diène, d'isoprène et de styrène, et copolymères de buta-1,3-diène, d'acrylonitrile et de styrène, ainsi que les mélanges de tels polymères.

**26.** Pneumatique conforme à l'une des revendications 1 à 24, pour lequel le polymère élastomère employé dans la préparation dudit polymère élastomère époxydé a été choisi parmi les polymères élastomères formés à partir d'une ou plusieurs monooléfine(s), d'un comonomère oléfinique et d'au moins un diène, ainsi que les dérivés de tels polymères.

**27.** Pneumatique conforme à la revendication 26, pour lequel le polymère élastomère employé dans la préparation dudit polymère élastomère époxydé a été choisi parmi les suivants : copolymères d'éthylène, de propylène et de diène (EPDM), polyisobutène, caoutchoucs butyl et caoutchoucs butyl halogénés, ainsi que les mélanges de tels polymères.

**28.** Pneumatique conforme à l'une des revendications précédentes, pour lequel ledit matériau à structure en couches (b) a été choisi parmi les phyllosilicates, tels que les suivants : smectites, telles les montmorillonite, bentonite, nontronite, beidellite, volkonskoïte, laponite, hectorite, saponite, sauconite, magadiite, kenyaïte et stevensite, vermiculite, halloysite, séricite, oxydes aluminates et hydrotalcite, ainsi que les mélanges de tels matériaux.

**29.** Pneumatique conforme à la revendication 28, dans lequel ledit matériau à structure en couches (b) est de la montmorillonite.

**30.** Pneumatique conforme à l'une des revendications précédentes, pour lequel ledit matériau à structure en couches (b) a été traité avec un agent de compatibilisation.

**31.** Pneumatique conforme à la revendication 30, pour lequel ledit agent de compatibilisation a été choisi parmi les sels de phosphonium quaternaire ou d'ammonium quaternaire de formule générale (I) :

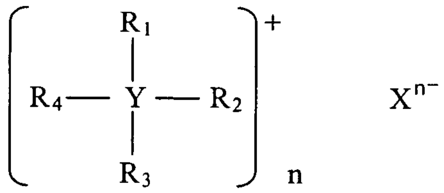

(I)

dans laquelle

- Y représente un atome d'azote ou de phosphore ;
- $R_1$, $R_2$, $R_3$ et $R_4$ représentent des entités identiques ou différentes, choisies parmi les groupes alkyle ou hydroxyalkyle en $C_{1-20}$, linéaires

ou ramifiés, les groupes alcényle ou hydroxyalcényle en $C_{1-20}$, linéaires ou ramifiés, les groupes de formule $-R_5$-SH ou $-R_5$-NH- où $R_5$ représente un groupe alcanediyle en $C_{1-20}$, linéaire ou ramifié, les groupes aryle en $C_{6-18}$, les groupes alkyl-aryle ou aryl-alkyle en $C_{7-20}$, et les groupes cycloalkyle en $C_{5-18}$, lesquels groupes cycloalkyle peuvent comporter un ou des hétéroatome(s), tels des atomes d'oxygène, d'azote ou de soufre ;

- $X^{n-}$ représente un anion, tel l'ion chlorure, l'ion sulfate ou l'ion phosphate ;
- et n vaut 1, 2 ou 3.

**32.** Pneumatique conforme à l'une des revendications précédentes, pour lequel on a préalablement mélangé ledit polymère élastomère époxydé et ledit matériau à structure en couches, pour en faire un mélange-maître.

**33.** Pneumatique conforme à la revendication 32, pour lequel on a obtenu ledit mélange-maître en mettant en oeuvre un procédé comprenant les étapes suivantes :

- envoyer au moins un polymère élastomère époxydé et au moins un matériau à structure en couches dans un dispositif mélangeur ;
- mélanger ces composants et faire ramollir le mélange obtenu, ce qui donne un mélange-maître ;
- et décharger dudit dispositif mélangeur le mélange-maître ainsi obtenu.

**34.** Pneumatique conforme à la revendication 32, pour lequel on a obtenu ledit mélange-maître en mettant en oeuvre un procédé comprenant les étapes suivantes :

- envoyer au moins un polymère élastomère, au moins un agent d'époxydation et au moins un matériau à structure en couches dans un dispositif mélangeur ;
- mélanger ces composants et faire ramollir le mélange obtenu, ce qui donne un mélange-maître ;
- et décharger dudit dispositif mélangeur le mélange-maître ainsi obtenu.

**35.** Pneumatique conforme à la revendication 32, pour lequel on a obtenu ledit mélange-maître en mettant en oeuvre un procédé comprenant les étapes suivantes :

- envoyer au moins un polymère élastomère dans un dispositif mélangeur ;
- envoyer dans ce dispositif mélangeur au moins un précurseur de peroxyde d'hydrogène ;
- envoyer dans ce dispositif mélangeur au moins un acide carboxylique,

ou un dérivé d'un tel acide ;

- mélanger et faire réagir, en présence d'eau, ledit polymère élastomère au nombre d'au moins un avec ledit précurseur de peroxyde d'hydrogène au nombre d'au moins un et ledit acide carboxylique ou dérivé d'un tel acide au nombre d'au moins un ;

- envoyer dans ledit dispositif mélangeur au moins un matériau inorganique à structure en couches ;
- brasser et faire ramollir le mélange obtenu, ce qui donne un mélange-maître ;
- et décharger dudit dispositif mélangeur le mélange-maître ainsi obtenu.

**36.** Pneumatique conforme à l'une des revendications précédentes,
dans lequel ladite base élastomère réticulable (a) comprend au moins un deuxième polymère élastomère ($a_2$) choisi parmi les suivants :

- cis-1,4-polyisoprène naturel ou synthétique, 3,4-polyisoprène, polybutadiène, copolymères d'isoprène et d'isobutène, éventuellement halogénés, copolymères de buta-1,3-diène et d'acrylonitrile, copolymères de buta-1,3-diène et de styrène, copolymères de buta-1,3-diène, d'isoprène et de styrène, et copolymères de buta-1,3-diène, d'acrylonitrile et de styrène, ainsi que les mélanges de tels polymères ;
- copolymères d'éthylène et de propylène (EPR), copolymères d'éthylène, de propylène et de diène (EPDM), polyisobutène, caoutchoucs butyl et caoutchoucs butyl halogénés, en particulier caoutchoucs butyl chlorés

ou bromés, ainsi que les mélanges de tels polymères ;

- et polymères élastomères formés à partir d'une ou plusieurs monooléfine(s) et d'un comonomère oléfinique, tels les copolymères d'éthylène et de propylène (EPR), ainsi que les dérivés de tels polymères.

**37.** Pneumatique conforme à l'une des revendications précédentes,
dans lequel ladite composition élastomère réticulable comprend de 0 à 120 pcc d'au moins une charge renforçante (c) de type noir de carbone.

**38.** Pneumatique conforme à la revendication 37, dans lequel ladite composition élastomère réticulable comprend de 20 à 90 pcc d'au moins une charge renforçante (c) de type noir de carbone.

**39.** Pneumatique conforme à l'une des revendications précédentes,
dans lequel ladite composition élastomère réticulable comprend au moins un agent de couplage (d) de type silane.

**40.** Pneumatique conforme à la revendication 39, pour lequel ledit agent de couplage (d) de type silane a été choisi parmi ceux qui comportent au moins un groupe silyle hydrolysable et qui peuvent être représentés par la formule générale (II) suivante :

$$(R)_3Si\text{-}C_nH_{2n}\text{-}X \qquad (II)$$

dans laquelle

- les symboles R représentent des entités qui peuvent être identiques

ou différentes et qui sont choisies parmi les groupes alkyle, alcoxy et aryloxy et les atomes d'halogène, sous réserve qu'au moins l'une de ces entités représentées par R soit un groupe alcoxy ou aryloxy ;

- l'indice n est un nombre entier qui vaut de 1 à 6, bornes incluses ;
- X représente une entité choisie parmi les groupes nitroso, sulfanyle, amino et vinyle, les groupes de type époxyde ou imide, un atome de chlore, et les groupes de formule $-(S)_m-C_nH2_n-Si(R)_3$ ou -S-CO-R où les indices m et n sont des nombres entiers qui valent de 1 à 6, bornes incluses, et R a la signification indiquée ci-dessus.

**41.** Pneumatique conforme à la revendication 39 ou 40, dans lequel, dans ladite composition élastomère réticulable, ledit agent de couplage (d) de type silane se trouve en une proportion de 0 à 10 pcc.

**42.** Pneumatique pour roue de véhicule, conforme à la revendication 41, dans lequel, dans ladite composition élastomère réticulable, ledit agent de couplage (d) de type silane se trouve en une proportion de 0,5 à 5 pcc.

**43.** Pneumatique conforme à l'une des revendications précédentes,
dans lequel, dans ladite composition élastomère réticulable, il y a au moins une charge renforçante supplémentaire, présente en une proportion de 0 à 120 pcc.

**44.** Pneumatique conforme à la revendication 43, dans lequel ladite charge renforçante supplémentaire est une silice.

**45.** Pneumatique pour roue de véhicule, conforme à la revendication 44, dans lequel il y a en plus au moins un autre agent de couplage (d) de type silane, tel que défini dans la revendication 40.

**46.** Composition élastomère réticulable comprenant :

a) une base élastomère réticulable comprenant au moins 10 pcc d'au moins un polymère élastomère époxydé ($a_1$) qui contient moins de 10 % en moles de groupes époxy, par rapport au nombre total de moles de monomères présentes dans le polymère élastomère ;
b) et de 2 à 50 pcc d'au moins un matériau à structure en couches.

**47.** Composition élastomère réticulable, conforme à la revendication 46, dans laquelle ladite base élastomère réticulable comprend de 30 à 100 pcc d'au moins un polymère élastomère époxydé ($a_1$).

**48.** Composition élastomère réticulable, conforme à la revendication 46 ou 47, dans laquelle ledit polymère élastomère époxydé contient de 0,1 à 5 % en moles de groupes époxy, par rapport au nombre total de moles de monomères présentes dans le polymère élastomère.

**49.** Composition élastomère réticulable, conforme à l'une des revendications 46 à 48, dans laquelle ledit matériau à structure en couches se trouve présent en une proportion de 5 à 30 pcc.

**50.** Composition élastomère réticulable, conforme à l'une des revendications 46 à 49, dans laquelle les couches individuelles dudit matériau à structure en couches présentent une épaisseur de 0,01 à 30 nm.

**51.** Composition élastomère réticulable, conforme à la revendication 50, dans laquelle les couches individuelles dudit matériau à structure en couches présentent une épaisseur de 0,05 à 15 nm.

**52.** Composition élastomère réticulable, conforme à l'une des revendications 46 à 51, dans laquelle ledit polymère élastomère époxydé est du type défini dans l'une des revendications 20 à 27.

**53.** Composition élastomère réticulable, conforme à l'une des revendications 46 à 52, dans laquelle ledit matériau à structure en couches est du type défini dans la revendication 28 ou 29.

**54.** Composition élastomère réticulable, conforme à la revendication 53, dans laquelle ledit matériau à structure en couches est ajouté tel quel.

**55.** Composition élastomère réticulable, conforme à la revendication 53, dans laquelle ledit matériau à structure en couches est ajouté après avoir été traité avec au moins un agent de compatibilisation du type défini dans la revendication 31.

**56.** Composition élastomère réticulable, conforme à l'une des revendications 46 à 55, pour laquelle on a préalablement mélangé ledit polymère élastomère époxydé et ledit matériau à structure en couches, pour en faire un mélange-maître.

**57.** Composition élastomère réticulable, conforme à la revendication 56, pour laquelle on a obtenu ledit mélange-maître en opérant selon un procédé défini dans l'une des revendications 33 à 35.

**58.** Composition élastomère réticulable, conforme à l'une des revendications 46 à 57, dans laquelle ladite base élastomère réticulable (a) comprend au moins un deuxième polymère élastomère ($a_2$) du type défini dans la revendication 36.

**59.** Composition élastomère réticulable, conforme à l'une des revendications 46 à 58, laquelle composition élastomère réticulable comprend au moins un noir de carbone, conformément à la revendication 37 ou 38.

**60.** Composition élastomère réticulable, conforme à l'une des revendications 46 à 59, laquelle composition élastomère réticulable comprend au moins un agent de couplage (d) de type silane, selon ce qui est défini dans l'une des revendications 40 à 42.

**61.** Composition élastomère réticulable, conforme à l'une des revendications 46 à 60, dans laquelle il y a au moins une charge renforçante supplémentaire, présente en une proportion de 0 à 120 pcc.

**62.** Composition élastomère réticulable, conforme à la revendication 61, dans laquelle la charge renforçante supplémentaire est une silice.

**63.** Composition élastomère réticulable, conforme à la revendication 62, dans laquelle il y a au moins un agent de couplage (d) de type silane, selon ce qui est défini dans l'une des revendications 40 à 42.

**64.** Article manufacturé réticulé, obtenu par réticulation d'une composition élastomère réticulable, conforme à l'une des revendications 46 à 63.

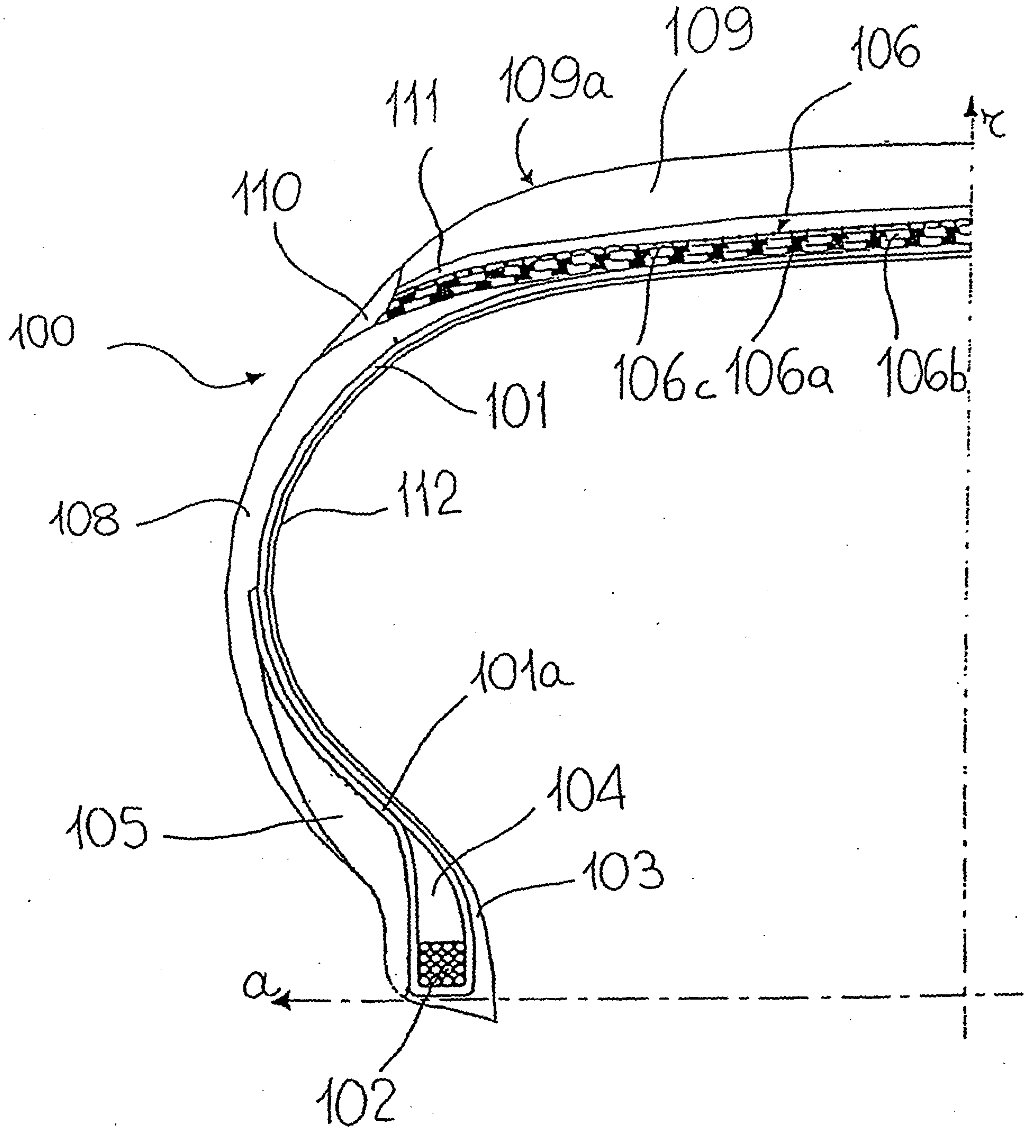
109
106
109a
111
r
110
100
106c
106a
106b
101
108
112
101a
104
105
103
a
102

FIG. 1

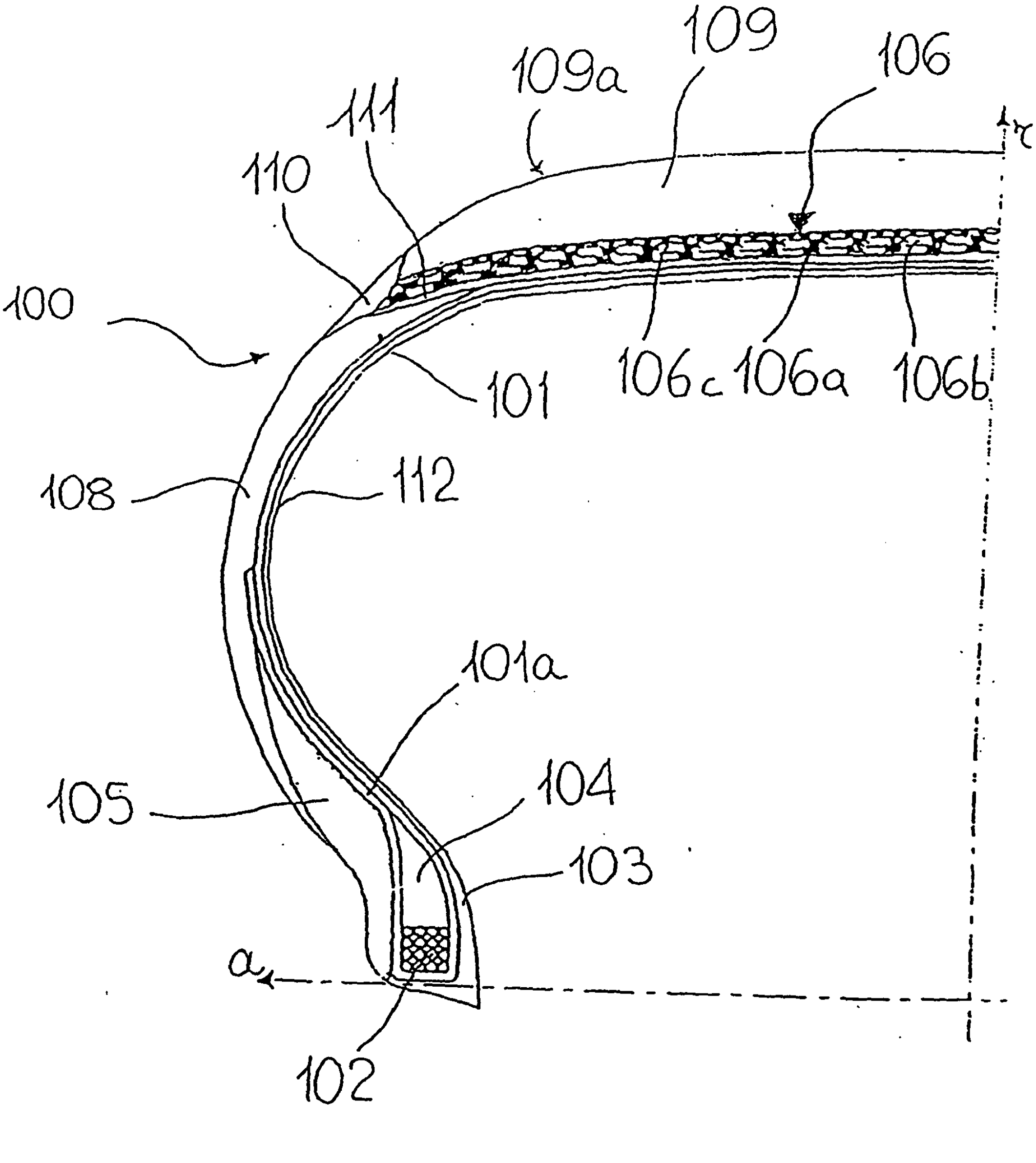
109a
109
106
r
111
110
100
106c
106a
106b
101
108
112
101a
105
104
103
a
102

FIG. 2

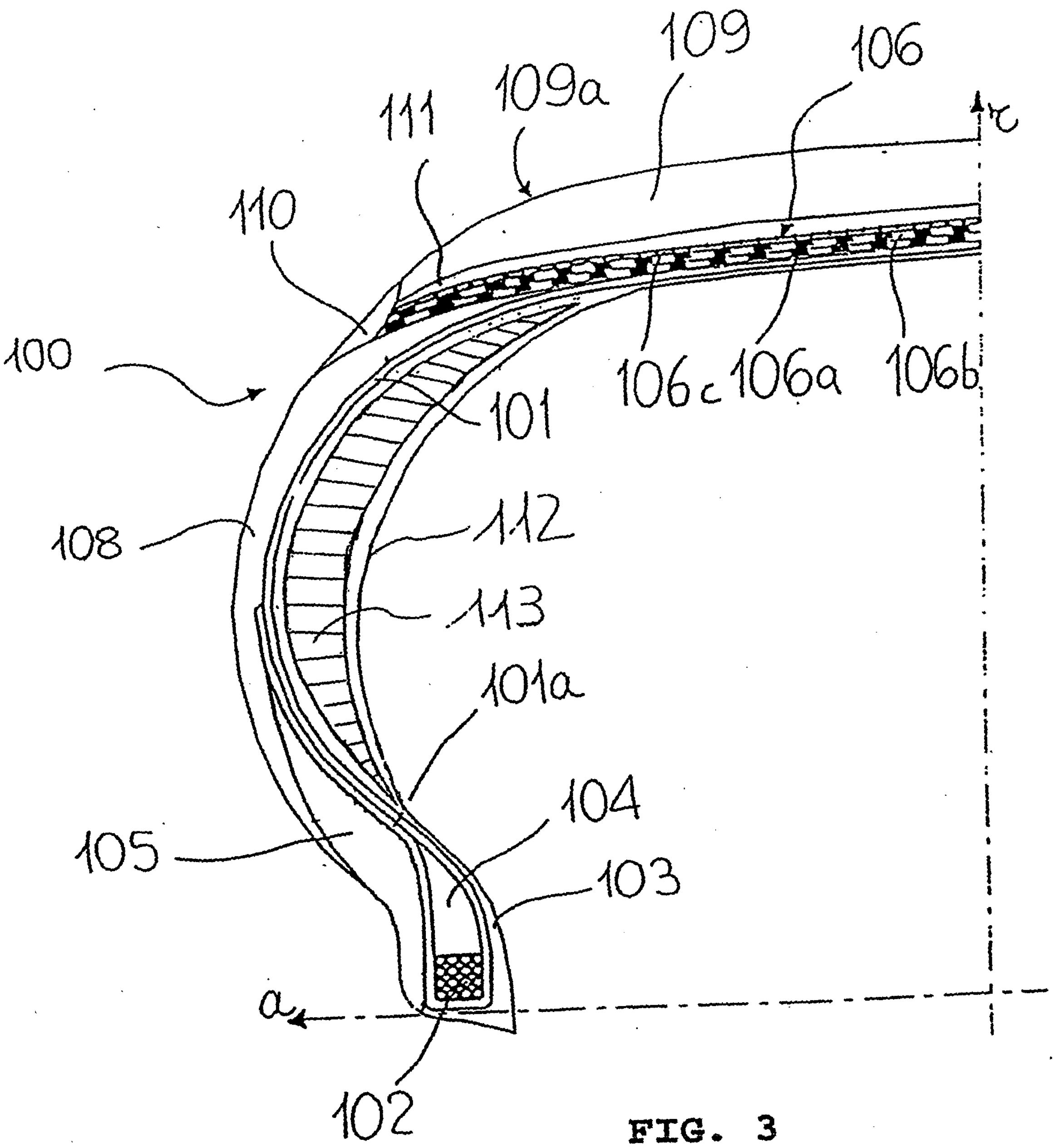
109
106
109a
r
111
110
100
106c
106a
106b
101
108
112
113
101a
104
105
103
a
102

FIG. 3

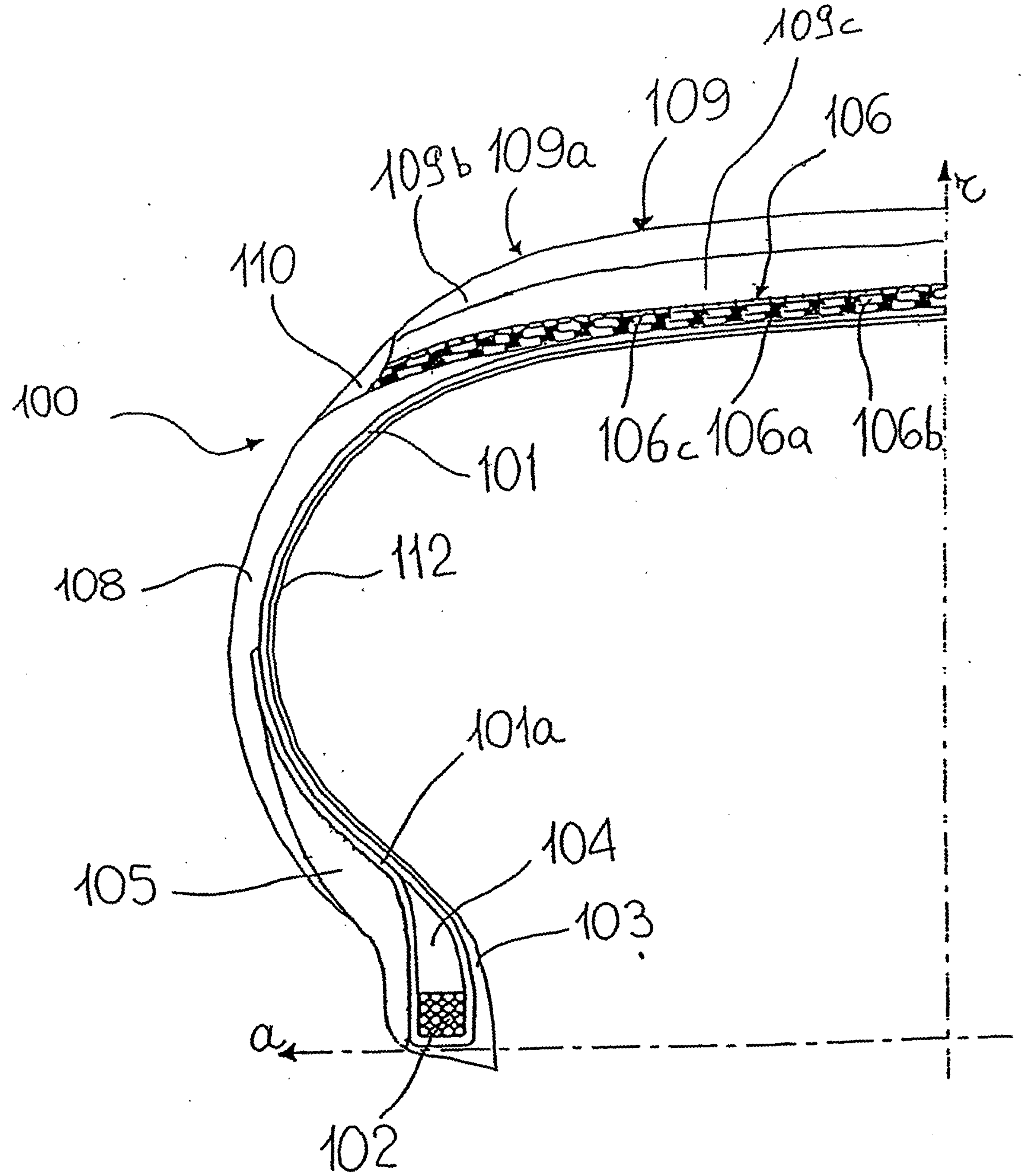
109c
109
106
109b 109a
r
110
100
106c 106a 106b
101
108
112
101a
104
105
103
a
102

FIG. 4

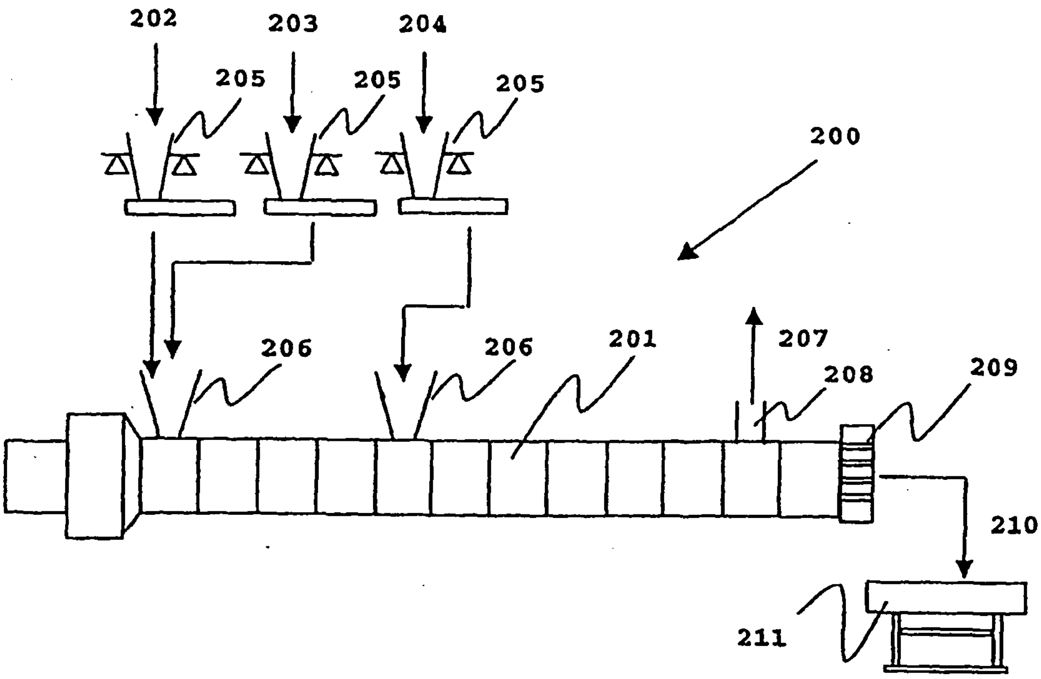


FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 691218 A
- WO 0224596 A
- EP 1193085 A
- JP 2003221473 A
- US 20030191224 A
- US 20030004250 A
- US 20030144401 A
- WO 2004005388 A
- WO 0037555 A
- WO 2004056586 A
- US 20020095008 A1
- EP 1195402 A
- US 4341672 A
- EP 451604 A
- US 4742124 A
- US 4550142 A
- US 4136103 A
- US 5747560 A
- US 5952093 A
- EP 928680 A
- EP 928702 A
- US 5238040 A
- EP 943466 A
- EP 199064 A
- US 4872822 A
- US 4768937 A
- WO 0136185 A
- EP 976536 A
- EP 968814 A
- EP 1201414 A
- EP 1211057 A
- EP 1189744 A


### Non-patent literature cited in the description


- **SCHULZ et al.** *Rubber Chemistry and Technology,* vol. 55, 809